# EUROPEAN PATENT SPECIFICATION

(11) **EP 2 836 692 B1**
(45) Date of publication and mention of the grant of the patent: **19.02.2020**
(21) Application number: 13776352.0
(22) Date of filing: 10.04.2013
(51) Int. Cl.: F02C 9/16, F02C 1/00, F02C 1/06, F02C 1/08, F02C 3/34, F02C 6/18, F02C 9/00

(54) **SYSTEM AND METHOD FOR A STOICHIOMETRIC EXHAUST GAS RECIRCULATION GAS TURBINE SYSTEM**
SYSTEM UND VERFAHREN FÜR GASTURBINENANLAGE MIT STÖCHIOMETRISCHER ABGASRÜCKFÜHRUNG
SYSTÈME ET PROCÉDÉ POUR UN SYSTÈME DE TURBINE À GAZ À RECIRCULATION DES GAZ D'ÉCHAPPEMENT STOCHIOMÉTRIQUE

(30) Priority: 12.04.2012 US 201213445003; 28.12.2012 US 201261747211 P
(43) Date of publication of application: 18.02.2015
(73) Proprietor: General Electric Company, Schenectady, NY 12345 (US); ExxonMobil Upstream Research Company, Spring TX 77389 (US)
(72) Inventor: WICHMANN, Lisa Anne, Greenville, South Carolina 29615 (US); SIMPSON, Stanley Frank, Simpsonville, South Carolina 29681 (US)
(74) Representative: Abel & Imray
(86) International application number: PCT/US2013/036020
(87) International publication number: WO 2013/155214

(56) References cited:
- WO-A1-2012/003078
- WO-A1-2012/003078
- WO-A1-2012/018457
- WO-A1-2012/018457
- WO-A1-2012/018458
- US-A1- 2008 083 226
- US-A1- 2009 301 054
- US-A1- 2011 110 759
- US-A1- 2011 110 759

## Description

### CROSS-REFERENCE TO RELATED APPLICATIONS

This application claims priority to US Non-Provisional Patent Application No. 13/445,003, entitled "METHODS, SYSTEMS AND APPARATUS RELATING TO COMBUSTION TURBINE POWER PLANTS WITH EXHAUST GAS RECIRCULATION", filed April 12, 2012, and US Provisional Patent Application No. 61/747,211, entitled "SYSTEM AND METHOD FOR A STOICHIOMETRIC EXHAUST GAS RECIRCULATION GAS TURBINE SYSTEM", filed December 28, 2012.

### BACKGROUND OF THE INVENTION

The subject matter disclosed herein relates to gas turbine engines.

Gas turbine engines are used in a wide variety of applications, such as power generation, aircraft, and various machinery. Gas turbine engine generally combust a fuel with an oxidant (e.g., air) in a combustor section to generate hot combustion products, which then drive one or more turbine stages of a turbine section. In turn, the turbine section drives one or more compressor stages of a compressor section, thereby compressing oxidant for intake into the combustor section along with the fuel. Again, the fuel and oxidant mix in the combustor section, and then combust to produce the hot combustion products. Gas turbine engines generally premix the fuel and oxidant along one or more flow paths upstream from a combustion chamber of the combustor section, and thus gas turbine engines generally operate with premix flames. Unfortunately, the premix flames may be difficult to control or maintain, which can impact various exhaust emission and power requirements. Furthermore, gas turbine engines typically consume a vast amount of air as the oxidant, and output a considerable amount of exhaust gas into the atmosphere. In other words, the exhaust gas is typically wasted as a byproduct of the gas turbine operation.

US2009/0301054A1 discloses a turbine system having exhaust gas recirculation and reheat. WO2012/018458A1, US2011/110759A1 and WO2012/003078A1 each disclose exhaust gas extraction systems.

### BRIEF DESCRIPTION OF THE INVENTION

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In a first embodiment, a system includes a turbine combustor, a turbine driven by combustion products from the turbine combustor, and an exhaust gas compressor. The exhaust compressor is configured to compress and route an exhaust gas from the turbine to the turbine combustor. The system also includes an exhaust gas recirculation (EGR) path extending through the exhaust gas compressor, the turbine combustor, and the turbine, a first exhaust gas (EG) extraction port disposed along the EGR path, and a second EG extraction port disposed along the EGR path.

In a second embodiment, a system includes a control system configured to receive sensor feedback indicative of a property of exhaust gas flowing through a portion of an exhaust gas recirculation (EGR) path extending through an exhaust gas compressor, a turbine combustor, and a turbine. The control system is also configured to control extraction of the exhaust gas through a plurality of extraction ports located along the EGR path, based at least in part on the sensor feedback.

In a third embodiment, a method includes driving a turbine with combustion products from a turbine combustor, compressing an exhaust gas from the turbine in an exhaust gas compressor, and routing the exhaust gas along a flow path from the exhaust gas compressor, through the turbine combustor, and into the turbine. The method also includes extracting the exhaust gas via a first extraction port disposed along the flow path, and extracting the exhaust gas via a second extraction port disposed along the flow path.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a diagram of an embodiment of a system having a turbine-based service system coupled to a hydrocarbon production system;
FIG. 2 is a diagram of an embodiment of the system of FIG. 1, further illustrating a control system and a combined cycle system;
FIG. 3 is a diagram of an embodiment of the system of FIGS. 1 and 2, further illustrating details of a gas turbine engine, exhaust gas supply system, and exhaust gas processing system;
FIG. 4 is a flow chart of an embodiment of a process for operating the system of FIGS. 1-3;
FIG. 5 is a diagram of an embodiment of the system of FIGS. 1-3, further illustrating multiple extraction points for extracting exhaust gas from the system;
FIG. 6 is a diagram of an embodiment of the system of FIGS. 1-3 and 5, illustrating a gas turbine engine with two combustor units;
FIG. 7 is a diagram of an embodiment of the exhaust gas supply system of FIGS. 3, 5, and 6, illustrating a mixing unit;
FIG. 8 is a diagram of an embodiment of the exhaust gas supply system of FIGS. 3, 5, and 6; and
FIG. 9 is a flow chart of an embodiment of a process for operating the system of FIGS. 5-8.

### DETAILED DESCRIPTION OF THE INVENTION

The present invention relates to a system according to claim 1 and to a method according to claim 9. One or more specific embodiments of the present invention will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations unless specified otherwise.

As discussed in detail below, the disclosed embodiments relate generally to gas turbine systems with exhaust gas recirculation (EGR), and particularly stoichiometric operation of the gas turbine systems using EGR. For example, the gas turbine systems may be configured to recirculate the exhaust gas along an exhaust recirculation path, stoichiometrically combust fuel and oxidant along with at least some of the recirculated exhaust gas, and capture the exhaust gas for use in various target systems. The recirculation of the exhaust gas along with stoichiometric combustion may help to increase the concentration level of carbon dioxide (CO₂) in the exhaust gas, which can then be post treated to separate and purify the CO₂ and nitrogen (N₂) for use in various target systems. The gas turbine systems also may employ various exhaust gas processing (e.g., heat recovery, catalyst reactions, etc.) along the exhaust recirculation path, thereby increasing the concentration level of CO₂, reducing concentration levels of other emissions (e.g., carbon monoxide, nitrogen oxides, and unburnt hydrocarbons), and increasing energy recovery (e.g., with heat recovery units). Furthermore, the gas turbine engines may be configured to combust the fuel and oxidant with one or more diffusion flames (e.g., using diffusion fuel nozzles), premix flames (e.g., using premix fuel nozzles), or any combination thereof. In certain embodiments, the diffusion flames may help to maintain stability and operation within certain limits for stoichiometric combustion, which in turn helps to increase production of CO₂. For example, a gas turbine system operating with diffusion flames may enable a greater quantity of EGR, as compared to a gas turbine system operating with premix flames. In turn, the increased quantity of EGR helps to increase CO₂ production. Possible target systems include pipelines, storage tanks, carbon sequestration systems, and hydrocarbon production systems, such as enhanced oil recovery (EOR) systems.

As discussed in further detail below, the disclosed embodiments may extract exhaust gas from one or more extraction points (e.g., 1 to 100 or more points) on a gas turbine engine and an exhaust gas processing system (e.g., EGR system) along an exhaust gas recirculation path. For example, the extraction points may include an exhaust extraction point at or downstream of each compressor stage of a compressor section, a plurality of exhaust extraction points associated with one or more combustor sections, an exhaust extraction point at or downstream of each turbine stage of one or more turbine sections, and/or one or more exhaust extraction points at, upstream, or downstream from various exhaust processing components (e.g., catalyst units, heat exchangers such as heat recovery units or heat recovery steam generators, moisture removal units, particulate removal units, blowers, etc.). Each of these extraction points may be capable of extracting exhaust gas with a gas composition, temperature, pressure, and/or other characteristics (i.e., generally exhaust properties), which may be substantially equal, greater than, or lesser than other extraction points. In some embodiments, each extraction point may have exhaust properties that are suitable for one more downstream processes, and thus each extraction point may be used independently for such downstream processes. In other embodiments, two or more extraction points may be used collectively for one or more downstream processes, either as a mixture or independently. For example, the two or more extraction points may have similar, completely different, or partially similar and partially different exhaust properties (e.g., pressure, temperature, gas composition, etc.). In one example, the two or more extraction points may have similar pressures with different temperatures and/or gas compositions, such that the exhaust gas from the two or more extraction points may be mixed together to achieve a new temperature and/or gas composition with substantially the same pressure. In another example, the two or more extraction points may have similar temperatures and/or gas compositions with different pressures, such that the exhaust gas from the two or more extraction points may be mixed together to achieve a new pressure with substantially the same temperature and/or gas composition. Thus, depending on the demands of the downstream processes, any number of extraction points may be used to achieve the desired exhaust properties (e.g., pressure, temperature, gas composition, etc.) for the downstream processes.

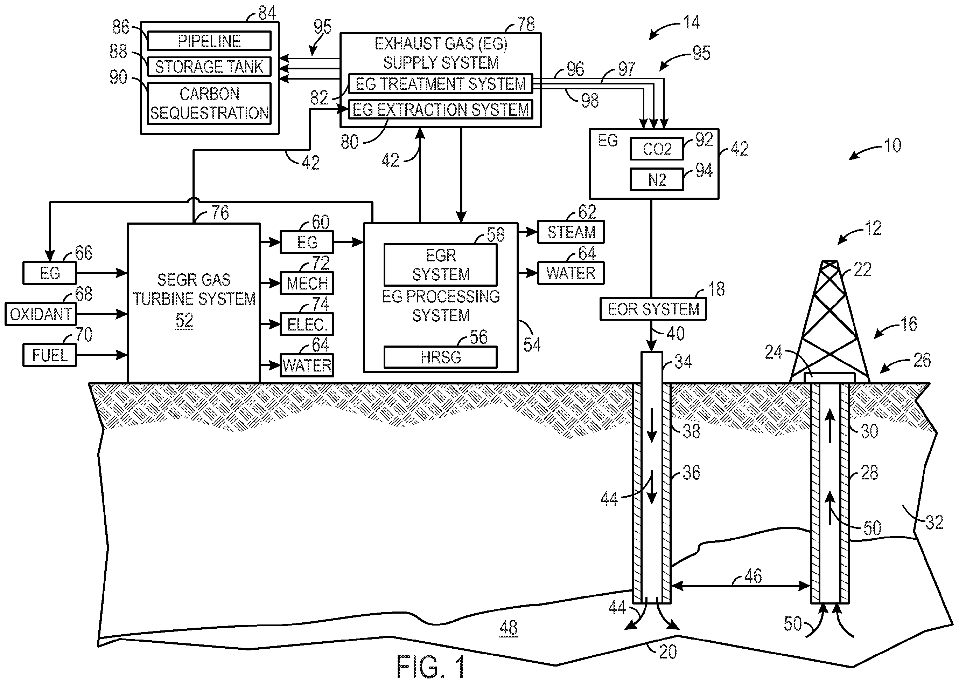

FIG. 1 is a diagram of an embodiment of a system 10 having a hydrocarbon production system 12 associated with a turbine-based service system 14. As discussed in further detail below, various embodiments of the turbine-based service system 14 are configured to provide various services, such as electrical power, mechanical power, and fluids (e.g., exhaust gas), to the hydrocarbon production system 12 to facilitate the production or retrieval of oil and/or gas. In the illustrated embodiment, the hydrocarbon production system 12 includes an oil/gas extraction system 16 and an enhanced oil recovery (EOR) system 18, which are coupled to a subterranean reservoir 20 (e.g., an oil, gas, or hydrocarbon reservoir). The oil/gas extraction system 16 includes a variety of surface equipment 22, such as a Christmas tree or production tree 24, coupled to an oil/gas well 26. Furthermore, the well 26 may include one or more tubulars 28 extending through a drilled bore 30 in the earth 32 to the subterranean reservoir 20. The tree 24 includes one or more valves, chokes, isolation sleeves, blowout preventers, and various flow control devices, which regulate pressures and control flows to and from the subterranean reservoir 20. While the tree 24 is generally used to control the flow of the production fluid (e.g., oil or gas) out of the subterranean reservoir 20, the EOR system 18 may increase the production of oil or gas by injecting one or more fluids into the subterranean reservoir 20.

Accordingly, the EOR system 18 may include a fluid injection system 34, which has one or more tubulars 36 extending through a bore 38 in the earth 32 to the subterranean reservoir 20. For example, the EOR system 18 may route one or more fluids 40, such as gas, steam, water, chemicals, or any combination thereof, into the fluid injection system 34. For example, as discussed in further detail below, the EOR system 18 may be coupled to the turbine-based service system 14, such that the system 14 routes an exhaust gas 42 (e.g., substantially or entirely free of oxygen) to the EOR system 18 for use as the injection fluid 40. The fluid injection system 34 routes the fluid 40 (e.g., the exhaust gas 42) through the one or more tubulars 36 into the subterranean reservoir 20, as indicated by arrows 44. The injection fluid 40 enters the subterranean reservoir 20 through the tubular 36 at an offset distance 46 away from the tubular 28 of the oil/gas well 26. Accordingly, the injection fluid 40 displaces the oil/gas 48 disposed in the subterranean reservoir 20, and drives the oil/gas 48 up through the one or more tubulars 28 of the hydrocarbon production system 12, as indicated by arrows 50. As discussed in further detail below, the injection fluid 40 may include the exhaust gas 42 originating from the turbine-based service system 14, which is able to generate the exhaust gas 42 on-site as needed by the hydrocarbon production system 12. In other words, the turbine-based system 14 may simultaneously generate one or more services (e.g., electrical power, mechanical power, steam, water (e.g., desalinated water), and exhaust gas (e.g., substantially free of oxygen)) for use by the hydrocarbon production system 12, thereby reducing or eliminating the reliance on external sources of such services.

In the illustrated embodiment, the turbine-based service system 14 includes a stoichiometric exhaust gas recirculation (SEGR) gas turbine system 52 and an exhaust gas (EG) processing system 54. The gas turbine system 52 may be configured to operate in a stoichiometric combustion mode of operation (e.g., a stoichiometric control mode) and a non-stoichiometric combustion mode of operation (e.g., a non-stoichiometric control mode), such as a fuel-lean control mode or a fuel-rich control mode. In the stoichiometric control mode, the combustion generally occurs in a substantially stoichiometric ratio of a fuel and oxidant, thereby resulting in substantially stoichiometric combustion. In particular, stoichiometric combustion generally involves consuming substantially all of the fuel and oxidant in the combustion reaction, such that the products of combustion are substantially or entirely free of unburnt fuel and oxidant. One measure of stoichiometric combustion is the equivalence ratio, or phi (φ), which is the ratio of the actual fuel/oxidant ratio relative to the stoichiometric fuel/oxidant ratio. An equivalence ratio of greater than 1.0 results in a fuel-rich combustion of the fuel and oxidant, whereas an equivalence ratio of less than 1.0 results in a fuel-lean combustion of the fuel and oxidant. In contrast, an equivalence ratio of 1.0 results in combustion that is neither fuel-rich nor fuel-lean, thereby substantially consuming all of the fuel and oxidant in the combustion reaction. In context of the disclosed embodiments, the term stoichiometric or substantially stoichiometric may refer to an equivalence ratio of approximately 0.95 to approximately 1.05. However, the disclosed embodiments may also include an equivalence ratio of 1.0 plus or minus 0.01, 0.02, 0.03, 0.04, 0.05, or more. Again, the stoichiometric combustion of fuel and oxidant in the turbine-based service system 14 may result in products of combustion or exhaust gas (e.g., 42) with substantially no unburnt fuel or oxidant remaining. For example, the exhaust gas 42 may have less than 1, 2, 3, 4, or 5 percent by volume of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. By further example, the exhaust gas 42 may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. However, the disclosed embodiments also may produce other ranges of residual fuel, oxidant, and other emissions levels in the exhaust gas 42. As used herein, the terms emissions, emissions levels, and emissions targets may refer to concentration levels of certain products of combustion (e.g., NO_{X}, CO, SO_{X}, O₂, N₂, H₂, HCs, etc.), which may be present in recirculated gas streams, vented gas streams (e.g., exhausted into the atmosphere), and gas streams used in various target systems (e.g., the hydrocarbon production system 12).

Although the SEGR gas turbine system 52 and the EG processing system 54 may include a variety of components in different embodiments, the illustrated EG processing system 54 includes a heat recovery steam generator (HRSG) 56 and an exhaust gas recirculation (EGR) system 58, which receive and process an exhaust gas 60 originating from the SEGR gas turbine system 52. The HRSG 56 may include one or more heat exchangers, condensers, and various heat recovery equipment, which collectively function to transfer heat from the exhaust gas 60 to a stream of water, thereby generating steam 62. The steam 62 may be used in one or more steam turbines, the EOR system 18, or any other portion of the hydrocarbon production system 12. For example, the HRSG 56 may generate low pressure, medium pressure, and/or high pressure steam 62, which may be selectively applied to low, medium, and high pressure steam turbine stages, or different applications of the EOR system 18. In addition to the steam 62, a treated water 64, such as a desalinated water, may be generated by the HRSG 56, the EGR system 58, and/or another portion of the EG processing system 54 or the SEGR gas turbine system 52. The treated water 64 (e.g., desalinated water) may be particularly useful in areas with water shortages, such as inland or desert regions. The treated water 64 may be generated, at least in part, due to the large volume of air driving combustion of fuel within the SEGR gas turbine system 52. While the on-site generation of steam 62 and water 64 may be beneficial in many applications (including the hydrocarbon production system 12), the on-site generation of exhaust gas 42, 60 may be particularly beneficial for the EOR system 18, due to its low oxygen content, high pressure, and heat derived from the SEGR gas turbine system 52. Accordingly, the HRSG 56, the EGR system 58, and/or another portion of the EG processing system 54 may output or recirculate an exhaust gas 66 into the SEGR gas turbine system 52, while also routing the exhaust gas 42 to the EOR system 18 for use with the hydrocarbon production system 12. Likewise, the exhaust gas 42 may be extracted directly from the SEGR gas turbine system 52 (i.e., without passing through the EG processing system 54) for use in the EOR system 18 of the hydrocarbon production system 12.

The exhaust gas recirculation is handled by the EGR system 58 of the EG processing system 54. For example, the EGR system 58 includes one or more conduits, valves, blowers, exhaust gas treatment systems (e.g., filters, particulate removal units, gas separation units, gas purification units, heat exchangers, heat recovery units, moisture removal units, catalyst units, chemical injection units, or any combination thereof), and controls to recirculate the exhaust gas along an exhaust gas circulation path from an output (e.g., discharged exhaust gas 60) to an input (e.g., intake exhaust gas 66) of the SEGR gas turbine system 52. In the illustrated embodiment, the SEGR gas turbine system 52 intakes the exhaust gas 66 into a compressor section having one or more compressors, thereby compressing the exhaust gas 66 for use in a combustor section along with an intake of an oxidant 68 and one or more fuels 70. The oxidant 68 may include ambient air, pure oxygen, oxygen-enriched air, oxygen-reduced air, oxygen-nitrogen mixtures, or any suitable oxidant that facilitates combustion of the fuel 70. The fuel 70 may include one or more gas fuels, liquid fuels, or any combination thereof. For example, the fuel 70 may include natural gas, liquefied natural gas (LNG), syngas, methane, ethane, propane, butane, naphtha, kerosene, diesel fuel, ethanol, methanol, biofuel, or any combination thereof.

The SEGR gas turbine system 52 mixes and combusts the exhaust gas 66, the oxidant 68, and the fuel 70 in the combustor section, thereby generating hot combustion gases or exhaust gas 60 to drive one or more turbine stages in a turbine section. In certain embodiments, each combustor in the combustor section includes one or more premix fuel nozzles, one or more diffusion fuel nozzles, or any combination thereof. For example, each premix fuel nozzle may be configured to mix the oxidant 68 and the fuel 70 internally within the fuel nozzle and/or partially upstream of the fuel nozzle, thereby injecting an oxidant-fuel mixture from the fuel nozzle into the combustion zone for a premixed combustion (e.g., a premixed flame). By further example, each diffusion fuel nozzle may be configured to isolate the flows of oxidant 68 and fuel 70 within the fuel nozzle, thereby separately injecting the oxidant 68 and the fuel 70 from the fuel nozzle into the combustion zone for diffusion combustion (e.g., a diffusion flame). In particular, the diffusion combustion provided by the diffusion fuel nozzles delays mixing of the oxidant 68 and the fuel 70 until the point of initial combustion, i.e., the flame region. In embodiments employing the diffusion fuel nozzles, the diffusion flame may provide increased flame stability, because the diffusion flame generally forms at the point of stoichiometry between the separate streams of oxidant 68 and fuel 70 (i.e., as the oxidant 68 and fuel 70 are mixing). In certain embodiments, one or more diluents (e.g., the exhaust gas 60, steam, nitrogen, or another inert gas) may be pre-mixed with the oxidant 68, the fuel 70, or both, in either the diffusion fuel nozzle or the premix fuel nozzle. In addition, one or more diluents (e.g., the exhaust gas 60, steam, nitrogen, or another inert gas) may be injected into the combustor at or downstream from the point of combustion within each combustor. The use of these diluents may help temper the flame (e.g., premix flame or diffusion flame), thereby helping to reduce NO_{X} emissions, such as nitrogen monoxide (NO) and nitrogen dioxide (NO₂). Regardless of the type of flame, the combustion produces hot combustion gases or exhaust gas 60 to drive one or more turbine stages. As each turbine stage is driven by the exhaust gas 60, the SEGR gas turbine system 52 generates a mechanical power 72 and/or an electrical power 74 (e.g., via an electrical generator). The system 52 also outputs the exhaust gas 60, and may further output water 64. Again, the water 64 may be a treated water, such as a desalinated water, which may be useful in a variety of applications on-site or off-site.

Exhaust extraction is also provided by the SEGR gas turbine system 52 using one or more extraction points 76. For example, the illustrated embodiment includes an exhaust gas (EG) supply system 78 having an exhaust gas (EG) extraction system 80 and an exhaust gas (EG) treatment system 82, which receive exhaust gas 42 from the extraction points 76, treat the exhaust gas 42, and then supply or distribute the exhaust gas 42 to various target systems. The target systems may include the EOR system 18 and/or other systems, such as a pipeline 86, a storage tank 88, or a carbon sequestration system 90. The EG extraction system 80 may include one or more conduits, valves, controls, and flow separations, which facilitate isolation of the exhaust gas 42 from the oxidant 68, the fuel 70, and other contaminants, while also controlling the temperature, pressure, and flow rate of the extracted exhaust gas 42. The EG treatment system 82 may include one or more heat exchangers (e.g., heat recovery units such as heat recovery steam generators, condensers, coolers, or heaters), catalyst systems (e.g., oxidation catalyst systems), particulate and/or water removal systems (e.g., gas dehydration units, inertial separators, coalescing filters, water impermeable filters, and other filters), chemical injection systems, solvent based treatment systems (e.g., absorbers, flash tanks, etc.), carbon capture systems, gas separation systems, gas purification systems, and/or a solvent based treatment system, exhaust gas compressors, any combination thereof. These subsystems of the EG treatment system 82 enable control of the temperature, pressure, flow rate, moisture content (e.g., amount of water removal), particulate content (e.g., amount of particulate removal), and gas composition (e.g., percentage of CO₂, N₂, etc.).

The extracted exhaust gas 42 is treated by one or more subsystems of the EG treatment system 82, depending on the target system. For example, the EG treatment system 82 may direct all or part of the exhaust gas 42 through a carbon capture system, a gas separation system, a gas purification system, and/or a solvent based treatment system, which is controlled to separate and purify a carbonaceous gas (e.g., carbon dioxide) 92 and/or nitrogen (N₂) 94 for use in the various target systems. For example, embodiments of the EG treatment system 82 may perform gas separation and purification to produce a plurality of different streams 95 of exhaust gas 42, such as a first stream 96, a second stream 97, and a third stream 98. The first stream 96 may have a first composition that is rich in carbon dioxide and/or lean in nitrogen (e.g., a CO₂ rich, N₂ lean stream). The second stream 97 may have a second composition that has intermediate concentration levels of carbon dioxide and/or nitrogen (e.g., intermediate concentration CO₂, N₂ stream). The third stream 98 may have a third composition that is lean in carbon dioxide and/or rich in nitrogen (e.g., a CO₂ lean, N₂ rich stream). Each stream 95 (e.g., 96, 97, and 98) may include a gas dehydration unit, a filter, a gas compressor, or any combination thereof, to facilitate delivery of the stream 95 to a target system. In certain embodiments, the CO₂ rich, N₂ lean stream 96 may have a CO₂ purity or concentration level of greater than approximately 70, 75, 80, 85, 90, 95, 96, 97, 98, or 99 percent by volume, and a N₂ purity or concentration level of less than approximately 1, 2, 3, 4, 5, 10, 15, 20, 25, or 30 percent by volume. In contrast, the CO₂ lean, N₂ rich stream 98 may have a CO₂ purity or concentration level of less than approximately 1, 2, 3, 4, 5, 10, 15, 20, 25, or 30 percent by volume, and a N₂ purity or concentration level of greater than approximately 70, 75, 80, 85, 90, 95, 96, 97, 98, or 99 percent by volume. The intermediate concentration CO₂, N₂ stream 97 may have a CO₂ purity or concentration level and/or a N₂ purity or concentration level of between approximately 30 to 70, 35 to 65, 40 to 60, or 45 to 55 percent by volume. Although the foregoing ranges are merely non-limiting examples, the CO₂ rich, N₂ lean stream 96 and the CO₂ lean, N₂ rich stream 98 may be particularly well suited for use with the EOR system 18 and the other systems 84. However, any of these rich, lean, or intermediate concentration CO₂ streams 95 may be used, alone or in various combinations, with the EOR system 18 and the other systems 84. For example, the EOR system 18 and the other systems 84 (e.g., the pipeline 86, storage tank 88, and the carbon sequestration system 90) each may receive one or more CO₂ rich, N₂ lean streams 96, one or more CO₂ lean, N₂ rich streams 98, one or more intermediate concentration CO₂, N₂ streams 97, and one or more untreated exhaust gas 42 streams (i.e., bypassing the EG treatment system 82).

The EG extraction system 80 extracts the exhaust gas 42 at one or more extraction points 76 along the compressor section, the combustor section, and/or the turbine section, such that the exhaust gas 42 may be used in the EOR system 18 and other systems 84 at suitable temperatures and pressures. The EG extraction system 80 and/or the EG treatment system 82 also may circulate fluid flows (e.g., exhaust gas 42) to and from the EG processing system 54. For example, a portion of the exhaust gas 42 passing through the EG processing system 54 may be extracted by the EG extraction system 80 for use in the EOR system 18 and the other systems 84. In certain embodiments, the EG supply system 78 and the EG processing system 54 may be independent or integral with one another, and thus may use independent or common subsystems. For example, the EG treatment system 82 may be used by both the EG supply system 78 and the EG processing system 54. Exhaust gas 42 extracted from the EG processing system 54 may undergo multiple stages of gas treatment, such as one or more stages of gas treatment in the EG processing system 54 followed by one or more additional stages of gas treatment in the EG treatment system 82.

At each extraction point 76, the extracted exhaust gas 42 may be substantially free of oxidant 68 and fuel 70 (e.g., unburnt fuel or hydrocarbons) due to substantially stoichiometric combustion and/or gas treatment in the EG processing system 54. Furthermore, depending on the target system, the extracted exhaust gas 42 may undergo further treatment in the EG treatment system 82 of the EG supply system 78, thereby further reducing any residual oxidant 68, fuel 70, or other undesirable products of combustion. For example, either before or after treatment in the EG treatment system 82, the extracted exhaust gas 42 may have less than 1, 2, 3, 4, or 5 percent by volume of oxidant (e.g., oxygen), unburnt fuel or hydrocarbons (e.g., HCs), nitrogen oxides (e.g., NOx), carbon monoxide (CO), sulfur oxides (e.g., SO_{X}), hydrogen, and other products of incomplete combustion. By further example, either before or after treatment in the EG treatment system 82, the extracted exhaust gas 42 may have less than approximately 10, 20, 30, 40, 50, 60, 70, 80, 90, 100, 200, 300, 400, 500, 1000, 2000, 3000, 4000, or 5000 parts per million by volume (ppmv) of oxidant (e.g., oxygen), unburnt fuel or hydrocarbons (e.g., HCs), nitrogen oxides (e.g., NO_{X}), carbon monoxide (CO), sulfur oxides (e.g., SO_{X}), hydrogen, and other products of incomplete combustion. Thus, the exhaust gas 42 is particularly well suited for use with the EOR system 18.

The EGR operation of the turbine system 52 specifically enables the exhaust extraction at a multitude of locations 76. For example, the compressor section of the system 52 may be used to compress the exhaust gas 66 without any oxidant 68 (i.e., only compression of the exhaust gas 66), such that a substantially oxygen-free exhaust gas 42 may be extracted from the compressor section and/or the combustor section prior to entry of the oxidant 68 and the fuel 70. The extraction points 76 may be located at interstage ports between adjacent compressor stages, at ports along the compressor discharge casing, at ports along each combustor in the combustor section, or any combination thereof. In certain embodiments, the exhaust gas 66 may not mix with the oxidant 68 and fuel 70 until it reaches the head end portion and/or fuel nozzles of each combustor in the combustor section. Furthermore, one or more flow separators (e.g., walls, dividers, baffles, or the like) may be used to isolate the oxidant 68 and the fuel 70 from the extraction points 76. With these flow separators, the extraction points 76 may be disposed directly along a wall of each combustor in the combustor section.

Once the exhaust gas 66, oxidant 68, and fuel 70 flow through the head end portion (e.g., through fuel nozzles) into the combustion portion (e.g., combustion chamber) of each combustor, the SEGR gas turbine system 52 is controlled to provide a substantially stoichiometric combustion of the exhaust gas 66, oxidant 68, and fuel 70. For example, the system 52 may maintain an equivalence ratio of approximately 0.95 to approximately 1.05. As a result, the products of combustion of the mixture of exhaust gas 66, oxidant 68, and fuel 70 in each combustor is substantially free of oxygen and unburnt fuel. Thus, the products of combustion (or exhaust gas) may be extracted from the turbine section of the SEGR gas turbine system 52 for use as the exhaust gas 42 routed to the EOR system 18. Along the turbine section, the extraction points 76 may be located at any turbine stage, such as interstage ports between adjacent turbine stages. Thus, using any of the foregoing extraction points 76, the turbine-based service system 14 may generate, extract, and deliver the exhaust gas 42 to the hydrocarbon production system 12 (e.g., the EOR system 18) for use in the production of oil/gas 48 from the subterranean reservoir 20.

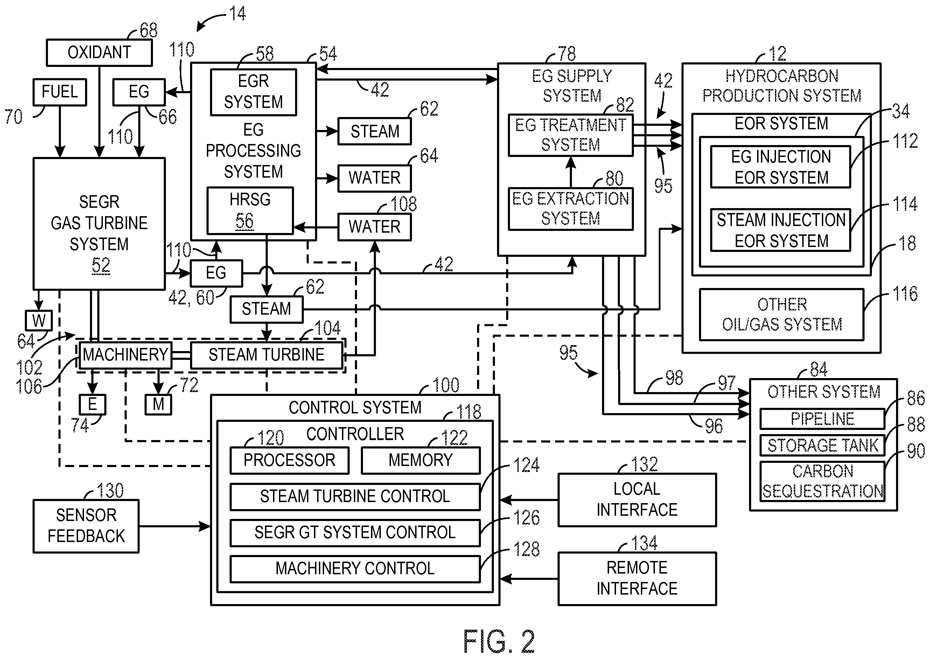

FIG. 2 is a diagram of an embodiment of the system 10 of FIG. 1, illustrating a control system 100 coupled to the turbine-based service system 14 and the hydrocarbon production system 12. In the illustrated embodiment, the turbine-based service system 14 includes a combined cycle system 102, which includes the SEGR gas turbine system 52 as a topping cycle, a steam turbine 104 as a bottoming cycle, and the HRSG 56 to recover heat from the exhaust gas 60 to generate the steam 62 for driving the steam turbine 104. Again, the SEGR gas turbine system 52 receives, mixes, and stoichiometrically combusts the exhaust gas 66, the oxidant 68, and the fuel 70 (e.g., premix and/or diffusion flames), thereby producing the exhaust gas 60, the mechanical power 72, the electrical power 74, and/or the water 64. For example, the SEGR gas turbine system 52 may drive one or more loads or machinery 106, such as an electrical generator, an oxidant compressor (e.g., a main air compressor), a gear box, a pump, equipment of the hydrocarbon production system 12, or any combination thereof. In some embodiments, the machinery 106 may include other drives, such as electrical motors or steam turbines (e.g., the steam turbine 104), in tandem with the SEGR gas turbine system 52. Accordingly, an output of the machinery 106 driven by the SEGR gas turbines system 52 (and any additional drives) may include the mechanical power 72 and the electrical power 74. The mechanical power 72 and/or the electrical power 74 may be used on-site for powering the hydrocarbon production system 12, the electrical power 74 may be distributed to the power grid, or any combination thereof. The output of the machinery 106 also may include a compressed fluid, such as a compressed oxidant 68 (e.g., air or oxygen), for intake into the combustion section of the SEGR gas turbine system 52. Each of these outputs (e.g., the exhaust gas 60, the mechanical power 72, the electrical power 74, and/or the water 64) may be considered a service of the turbine-based service system 14.

The SEGR gas turbine system 52 produces the exhaust gas 42, 60, which may be substantially free of oxygen, and routes this exhaust gas 42, 60 to the EG processing system 54 and/or the EG supply system 78. The EG supply system 78 may treat and delivery the exhaust gas 42 (e.g., streams 95) to the hydrocarbon production system 12 and/or the other systems 84. As discussed above, the EG processing system 54 may include the HRSG 56 and the EGR system 58. The HRSG 56 may include one or more heat exchangers, condensers, and various heat recovery equipment, which may be used to recover or transfer heat from the exhaust gas 60 to water 108 to generate the steam 62 for driving the steam turbine 104. Similar to the SEGR gas turbine system 52, the steam turbine 104 may drive one or more loads or machinery 106, thereby generating the mechanical power 72 and the electrical power 74. In the illustrated embodiment, the SEGR gas turbine system 52 and the steam turbine 104 are arranged in tandem to drive the same machinery 106. However, in other embodiments, the SEGR gas turbine system 52 and the steam turbine 104 may separately drive different machinery 106 to independently generate mechanical power 72 and/or electrical power 74. As the steam turbine 104 is driven by the steam 62 from the HRSG 56, the steam 62 gradually decreases in temperature and pressure. Accordingly, the steam turbine 104 recirculates the used steam 62 and/or water 108 back into the HRSG 56 for additional steam generation via heat recovery from the exhaust gas 60. In addition to steam generation, the HRSG 56, the EGR system 58, and/or another portion of the EG processing system 54 may produce the water 64, the exhaust gas 42 for use with the hydrocarbon production system 12, and the exhaust gas 66 for use as an input into the SEGR gas turbine system 52. For example, the water 64 may be a treated water 64, such as a desalinated water for use in other applications. The desalinated water may be particularly useful in regions of low water availability. Regarding the exhaust gas 60, embodiments of the EG processing system 54 may be configured to recirculate the exhaust gas 60 through the EGR system 58 with or without passing the exhaust gas 60 through the HRSG 56.

In the illustrated embodiment, the SEGR gas turbine system 52 has an exhaust recirculation path 110, which extends from an exhaust outlet to an exhaust inlet of the system 52. Along the path 110, the exhaust gas 60 passes through the EG processing system 54, which includes the HRSG 56 and the EGR system 58 in the illustrated embodiment. The EGR system 58 may include one or more conduits, valves, blowers, gas treatment systems (e.g., filters, particulate removal units, gas separation units, gas purification units, heat exchangers, heat recovery units such as heat recovery steam generators, moisture removal units, catalyst units, chemical injection units, or any combination thereof) in series and/or parallel arrangements along the path 110. Such gas treatment systems may further include any gas handling or processing equipment intended to modify a physical property of the recirculated gas. In other words, the EGR system 58 may include any flow control components, pressure control components, temperature control components, moisture control components, and gas composition control components along the exhaust recirculation path 110 between the exhaust outlet and the exhaust inlet of the system 52. Accordingly, in embodiments with the HRSG 56 along the path 110, the HRSG 56 may be considered a component of the EGR system 58. However, in certain embodiments, the HRSG 56 may be disposed along an exhaust path independent from the exhaust recirculation path 110. Regardless of whether the HRSG 56 is along a separate path or a common path with the EGR system 58, the HRSG 56 and the EGR system 58 intake the exhaust gas 60 and output either the recirculated exhaust gas 66, the exhaust gas 42 for use with the EG supply system 78 (e.g., for the hydrocarbon production system 12 and/or other systems 84), or another output of exhaust gas. Again, the SEGR gas turbine system 52 intakes, mixes, and stoichiometrically combusts the exhaust gas 66, the oxidant 68, and the fuel 70 (e.g., premixed and/or diffusion flames) to produce a substantially oxygen-free and fuel-free exhaust gas 60 for distribution to the EG processing system 54, the hydrocarbon production system 12, or other systems 84.

As noted above with reference to FIG. 1, the hydrocarbon production system 12 may include a variety of equipment to facilitate the recovery or production of oil/gas 48 from a subterranean reservoir 20 through an oil/gas well 26. For example, the hydrocarbon production system 12 may include the EOR system 18 having the fluid injection system 34. In the illustrated embodiment, the fluid injection system 34 includes an exhaust gas injection EOR system 112 and a steam injection EOR system 114. Although the fluid injection system 34 may receive fluids from a variety of sources, the illustrated embodiment may receive the exhaust gas 42 and the steam 62 from the turbine-based service system 14. The exhaust gas 42 and/or the steam 62 produced by the turbine-based service system 14 also may be routed to the hydrocarbon production system 12 for use in other oil/gas systems 116.

The quantity, quality, and flow of the exhaust gas 42 and/or the steam 62 may be controlled by the control system 100. The control system 100 may be dedicated entirely to the turbine-based service system 14, or the control system 100 may optionally also provide control (or at least some data to facilitate control) for the hydrocarbon production system 12 and/or other systems 84. In the illustrated embodiment, the control system 100 includes a controller 118 having a processor 120, a memory 122, a steam turbine control 124, a SEGR gas turbine system control 126, and a machinery control 128. The processor 120 may include a single processor or two or more redundant processors, such as triple redundant processors for control of the turbine-based service system 14. The memory 122 may include volatile and/or non-volatile memory. For example, the memory 122 may include one or more hard drives, flash memory, read-only memory, random access memory, or any combination thereof. The controls 124, 126, and 128 may include software and/or hardware controls. For example, the controls 124, 126, and 128 may include various instructions or code stored on the memory 122 and executable by the processor 120. The control 124 is configured to control operation of the steam turbine 104, the SEGR gas turbine system control 126 is configured to control the system 52, and the machinery control 128 is configured to control the machinery 106. Thus, the controller 118 (e.g., controls 124, 126, and 128) may be configured to coordinate various sub-systems of the turbine-based service system 14 to provide a suitable stream of the exhaust gas 42 to the hydrocarbon production system 12.

In certain embodiments of the control system 100, each element (e.g., system, subsystem, and component) illustrated in the drawings or described herein includes (e.g., directly within, upstream, or downstream of such element) one or more industrial control features, such as sensors and control devices, which are communicatively coupled with one another over an industrial control network along with the controller 118. For example, the control devices associated with each element may include a dedicated device controller (e.g., including a processor, memory, and control instructions), one or more actuators, valves, switches, and industrial control equipment, which enable control based on sensor feedback 130, control signals from the controller 118, control signals from a user, or any combination thereof. Thus, any of the control functionality described herein may be implemented with control instructions stored and/or executable by the controller 118, dedicated device controllers associated with each element, or a combination thereof.

In order to facilitate such control functionality, the control system 100 includes one or more sensors distributed throughout the system 10 to obtain the sensor feedback 130 for use in execution of the various controls, e.g., the controls 124, 126, and 128. For example, the sensor feedback 130 may be obtained from sensors distributed throughout the SEGR gas turbine system 52, the machinery 106, the EG processing system 54, the steam turbine 104, the hydrocarbon production system 12, or any other components throughout the turbine-based service system 14 or the hydrocarbon production system 12. For example, the sensor feedback 130 may include temperature feedback, pressure feedback, flow rate feedback, flame temperature feedback, combustion dynamics feedback, intake oxidant composition feedback, intake fuel composition feedback, exhaust composition feedback, the output level of mechanical power 72, the output level of electrical power 74, the output quantity of the exhaust gas 42, 60, the output quantity or quality of the water 64, or any combination thereof. For example, the sensor feedback 130 may include a composition of the exhaust gas 42, 60 to facilitate stoichiometric combustion in the SEGR gas turbine system 52. For example, the sensor feedback 130 may include feedback from one or more intake oxidant sensors along an oxidant supply path of the oxidant 68, one or more intake fuel sensors along a fuel supply path of the fuel 70, and one or more exhaust emissions sensors disposed along the exhaust recirculation path 110 and/or within the SEGR gas turbine system 52. The intake oxidant sensors, intake fuel sensors, and exhaust emissions sensors may include temperature sensors, pressure sensors, flow rate sensors, and composition sensors. The emissions sensors may includes sensors for nitrogen oxides (e.g., NOx sensors), carbon oxides (e.g., CO sensors and CO₂ sensors), sulfur oxides (e.g., SO_{X} sensors), hydrogen (e.g., H₂ sensors), oxygen (e.g., O₂ sensors), unburnt hydrocarbons (e.g., HC sensors), or other products of incomplete combustion, or any combination thereof.

Using this feedback 130, the control system 100 may adjust (e.g., increase, decrease, or maintain) the intake flow of exhaust gas 66, oxidant 68, and/or fuel 70 into the SEGR gas turbine system 52 (among other operational parameters) to maintain the equivalence ratio within a suitable range, e.g., between approximately 0.95 to approximately 1.05, between approximately 0.95 to approximately 1.0, between approximately 1.0 to approximately 1.05, or substantially at 1.0. For example, the control system 100 may analyze the feedback 130 to monitor the exhaust emissions (e.g., concentration levels of nitrogen oxides, carbon oxides such as CO and CO₂, sulfur oxides, hydrogen, oxygen, unburnt hydrocarbons, and other products of incomplete combustion) and/or determine the equivalence ratio, and then control one or more components to adjust the exhaust emissions (e.g., concentration levels in the exhaust gas 42) and/or the equivalence ratio. The controlled components may include any of the components illustrated and described with reference to the drawings, including but not limited to, valves along the supply paths for the oxidant 68, the fuel 70, and the exhaust gas 66; an oxidant compressor, a fuel pump, or any components in the EG processing system 54; any components of the SEGR gas turbine system 52, or any combination thereof. The controlled components may adjust (e.g., increase, decrease, or maintain) the flow rates, temperatures, pressures, or percentages (e.g., equivalence ratio) of the oxidant 68, the fuel 70, and the exhaust gas 66 that combust within the SEGR gas turbine system 52. The controlled components also may include one or more gas treatment systems, such as catalyst units (e.g., oxidation catalyst units), supplies for the catalyst units (e.g., oxidation fuel, heat, electricity, etc.), gas purification and/or separation units (e.g., solvent based separators, absorbers, flash tanks, etc.), and filtration units. The gas treatment systems may help reduce various exhaust emissions along the exhaust recirculation path 110, a vent path (e.g., exhausted into the atmosphere), or an extraction path to the EG supply system 78.

In certain embodiments, the control system 100 may analyze the feedback 130 and control one or more components to maintain or reduce emissions levels (e.g., concentration levels in the exhaust gas 42, 60, 95) to a target range, such as less than approximately 10, 20, 30, 40, 50, 100, 200, 300, 400, 500, 1000, 2000, 3000, 4000, 5000, or 10000 parts per million by volume (ppmv). These target ranges may be the same or different for each of the exhaust emissions, e.g., concentration levels of nitrogen oxides, carbon monoxide, sulfur oxides, hydrogen, oxygen, unburnt hydrocarbons, and other products of incomplete combustion. For example, depending on the equivalence ratio, the control system 100 may selectively control exhaust emissions (e.g., concentration levels) of oxidant (e.g., oxygen) within a target range of less than approximately 10, 20, 30, 40, 50, 60, 70, 80, 90, 100, 250, 500, 750, or 1000 ppmv; carbon monoxide (CO) within a target range of less than approximately 20, 50, 100, 200, 500, 1000, 2500, or 5000 ppmv; and nitrogen oxides (NO_{X}) within a target range of less than approximately 50, 100, 200, 300, 400, or 500 ppmv. In certain embodiments operating with a substantially stoichiometric equivalence ratio, the control system 100 may selectively control exhaust emissions (e.g., concentration levels) of oxidant (e.g., oxygen) within a target range of less than approximately 10, 20, 30, 40, 50, 60, 70, 80, 90, or 100 ppmv; and carbon monoxide (CO) within a target range of less than approximately 500, 1000, 2000, 3000, 4000, or 5000 ppmv. In certain embodiments operating with a fuel-lean equivalence ratio (e.g., between approximately 0.95 to 1.0), the control system 100 may selectively control exhaust emissions (e.g., concentration levels) of oxidant (e.g., oxygen) within a target range of less than approximately 500, 600, 700, 800, 900, 1000, 1100, 1200, 1300, 1400, or 1500 ppmv; carbon monoxide (CO) within a target range of less than approximately 10, 20, 30, 40, 50, 60, 70, 80, 90, 100, 150, or 200 ppmv; and nitrogen oxides (e.g., NOx) within a target range of less than approximately 50, 100, 150, 200, 250, 300, 350, or 400 ppmv. The foregoing target ranges are merely examples, and are not intended to limit the scope of the disclosed embodiments.

The control system 100 also may be coupled to a local interface 132 and a remote interface 134. For example, the local interface 132 may include a computer workstation disposed on-site at the turbine-based service system 14 and/or the hydrocarbon production system 12. In contrast, the remote interface 134 may include a computer workstation disposed off-site from the turbine-based service system 14 and the hydrocarbon production system 12, such as through an internet connection. These interfaces 132 and 134 facilitate monitoring and control of the turbine-based service system 14, such as through one or more graphical displays of sensor feedback 130, operational parameters, and so forth.

Again, as noted above, the controller 118 includes a variety of controls 124, 126, and 128 to facilitate control of the turbine-based service system 14. The steam turbine control 124 may receive the sensor feedback 130 and output control commands to facilitate operation of the steam turbine 104. For example, the steam turbine control 124 may receive the sensor feedback 130 from the HRSG 56, the machinery 106, temperature and pressure sensors along a path of the steam 62, temperature and pressure sensors along a path of the water 108, and various sensors indicative of the mechanical power 72 and the electrical power 74. Likewise, the SEGR gas turbine system control 126 may receive sensor feedback 130 from one or more sensors disposed along the SEGR gas turbine system 52, the machinery 106, the EG processing system 54, or any combination thereof. For example, the sensor feedback 130 may be obtained from temperature sensors, pressure sensors, clearance sensors, vibration sensors, flame sensors, fuel composition sensors, exhaust gas composition sensors, or any combination thereof, disposed within or external to the SEGR gas turbine system 52. Finally, the machinery control 128 may receive sensor feedback 130 from various sensors associated with the mechanical power 72 and the electrical power 74, as well as sensors disposed within the machinery 106. Each of these controls 124, 126, and 128 uses the sensor feedback 130 to improve operation of the turbine-based service system 14.

In the illustrated embodiment, the SEGR gas turbine system control 126 may execute instructions to control the quantity and quality of the exhaust gas 42, 60, 95 in the EG processing system 54, the EG supply system 78, the hydrocarbon production system 12, and/or the other systems 84. For example, the SEGR gas turbine system control 126 may maintain a level of oxidant (e.g., oxygen) and/or unburnt fuel in the exhaust gas 60 below a threshold suitable for use with the exhaust gas injection EOR system 112. In certain embodiments, the threshold levels may be less than 1, 2, 3, 4, or 5 percent of oxidant (e.g., oxygen) and/or unburnt fuel by volume of the exhaust gas 42, 60; or the threshold levels of oxidant (e.g., oxygen) and/or unburnt fuel (and other exhaust emissions) may be less than approximately 10, 20, 30, 40, 50, 60, 70, 80, 90, 100, 200, 300, 400, 500, 1000, 2000, 3000, 4000, or 5000 parts per million by volume (ppmv) in the exhaust gas 42, 60. By further example, in order to achieve these low levels of oxidant (e.g., oxygen) and/or unburnt fuel, the SEGR gas turbine system control 126 may maintain an equivalence ratio for combustion in the SEGR gas turbine system 52 between approximately 0.95 and approximately 1.05. The SEGR gas turbine system control 126 also may control the EG extraction system 80 and the EG treatment system 82 to maintain the temperature, pressure, flow rate, and gas composition of the exhaust gas 42, 60, 95 within suitable ranges for the exhaust gas injection EOR system 112, the pipeline 86, the storage tank 88, and the carbon sequestration system 90. As discussed above, the EG treatment system 82 may be controlled to purify and/or separate the exhaust gas 42 into one or more gas streams 95, such as the CO₂ rich, N₂ lean stream 96, the intermediate concentration CO₂, N₂ stream 97, and the CO₂ lean, N₂ rich stream 98. In addition to controls for the exhaust gas 42, 60, and 95, the controls 124, 126, and 128 may execute one or more instructions to maintain the mechanical power 72 within a suitable power range, or maintain the electrical power 74 within a suitable frequency and power range.

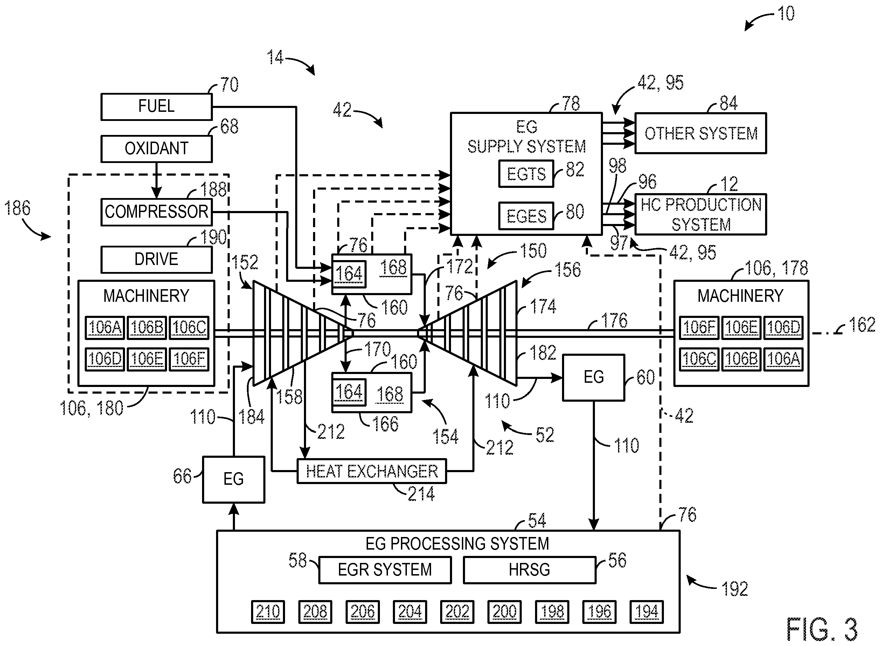

FIG. 3 is a diagram of embodiment of the system 10, further illustrating details of the SEGR gas turbine system 52 for use with the hydrocarbon production system 12 and/or other systems 84. In the illustrated embodiment, the SEGR gas turbine system 52 includes a gas turbine engine 150 coupled to the EG processing system 54. The illustrated gas turbine engine 150 includes a compressor section 152, a combustor section 154, and an expander section or turbine section 156. The compressor section 152 includes one or more exhaust gas compressors or compressor stages 158, such as 1 to 20 stages of rotary compressor blades disposed in a series arrangement. Likewise, the combustor section 154 includes one or more combustors 160, such as 1 to 20 combustors 160 distributed circumferentially about a rotational axis 162 of the SEGR gas turbine system 52. Furthermore, each combustor 160 may include one or more fuel nozzles 164 configured to inject the exhaust gas 66, the oxidant 68, and/or the fuel 70. For example, a head end portion 166 of each combustor 160 may house 1, 2, 3, 4, 5, 6, or more fuel nozzles 164, which may inject streams or mixtures of the exhaust gas 66, the oxidant 68, and/or the fuel 70 into a combustion portion 168 (e.g., combustion chamber) of the combustor 160.

The fuel nozzles 164 may include any combination of premix fuel nozzles 164 (e.g., configured to premix the oxidant 68 and fuel 70 for generation of an oxidant/fuel premix flame) and/or diffusion fuel nozzles 164 (e.g., configured to inject separate flows of the oxidant 68 and fuel 70 for generation of an oxidant/fuel diffusion flame). Embodiments of the premix fuel nozzles 164 may include swirl vanes, mixing chambers, or other features to internally mix the oxidant 68 and fuel 70 within the nozzles 164, prior to injection and combustion in the combustion chamber 168. The premix fuel nozzles 164 also may receive at least some partially mixed oxidant 68 and fuel 70. In certain embodiments, each diffusion fuel nozzle 164 may isolate flows of the oxidant 68 and the fuel 70 until the point of injection, while also isolating flows of one or more diluents (e.g., the exhaust gas 66, steam, nitrogen, or another inert gas) until the point of injection. In other embodiments, each diffusion fuel nozzle 164 may isolate flows of the oxidant 68 and the fuel 70 until the point of injection, while partially mixing one or more diluents (e.g., the exhaust gas 66, steam, nitrogen, or another inert gas) with the oxidant 68 and/or the fuel 70 prior to the point of injection. In addition, one or more diluents (e.g., the exhaust gas 66, steam, nitrogen, or another inert gas) may be injected into the combustor (e.g., into the hot products of combustion) either at or downstream from the combustion zone, thereby helping to reduce the temperature of the hot products of combustion and reduce emissions of NO_{X} (e.g., NO and NO₂). Regardless of the type of fuel nozzle 164, the SEGR gas turbine system 52 may be controlled to provide substantially stoichiometric combustion of the oxidant 68 and fuel 70.

In diffusion combustion embodiments using the diffusion fuel nozzles 164, the fuel 70 and oxidant 68 generally do not mix upstream from the diffusion flame, but rather the fuel 70 and oxidant 68 mix and react directly at the flame surface and/or the flame surface exists at the location of mixing between the fuel 70 and oxidant 68. In particular, the fuel 70 and oxidant 68 separately approach the flame surface (or diffusion boundary/interface), and then diffuse (e.g., via molecular and viscous diffusion) along the flame surface (or diffusion boundary/interface) to generate the diffusion flame. It is noteworthy that the fuel 70 and oxidant 68 may be at a substantially stoichiometric ratio along this flame surface (or diffusion boundary/interface), which may result in a greater flame temperature (e.g., a peak flame temperature) along this flame surface. The stoichiometric fuel/oxidant ratio generally results in a greater flame temperature (e.g., a peak flame temperature), as compared with a fuel-lean or fuel-rich fuel/oxidant ratio. As a result, the diffusion flame may be substantially more stable than a premix flame, because the diffusion of fuel 70 and oxidant 68 helps to maintain a stoichiometric ratio (and greater temperature) along the flame surface. Although greater flame temperatures can also lead to greater exhaust emissions, such as NOx emissions, the disclosed embodiments use one or more diluents to help control the temperature and emissions while still avoiding any premixing of the fuel 70 and oxidant 68. For example, the disclosed embodiments may introduce one or more diluents separate from the fuel 70 and oxidant 68 (e.g., after the point of combustion and/or downstream from the diffusion flame), thereby helping to reduce the temperature and reduce the emissions (e.g., NO_{X} emissions) produced by the diffusion flame.

In operation, as illustrated, the compressor section 152 receives and compresses the exhaust gas 66 from the EG processing system 54, and outputs a compressed exhaust gas 170 to each of the combustors 160 in the combustor section 154. Upon combustion of the fuel 60, oxidant 68, and exhaust gas 170 within each combustor 160, additional exhaust gas or products of combustion 172 (i.e., combustion gas) is routed into the turbine section 156. Similar to the compressor section 152, the turbine section 156 includes one or more turbines or turbine stages 174, which may include a series of rotary turbine blades. These turbine blades are then driven by the products of combustion 172 generated in the combustor section 154, thereby driving rotation of a shaft 176 coupled to the machinery 106. Again, the machinery 106 may include a variety of equipment coupled to either end of the SEGR gas turbine system 52, such as machinery 106, 178 coupled to the turbine section 156 and/or machinery 106, 180 coupled to the compressor section 152. In certain embodiments, the machinery 106, 178, 180 may include one or more electrical generators, oxidant compressors for the oxidant 68, fuel pumps for the fuel 70, gear boxes, or additional drives (e.g. steam turbine 104, electrical motor, etc.) coupled to the SEGR gas turbine system 52. Non-limiting examples are discussed in further detail below with reference to TABLE 1. As illustrated, the turbine section 156 outputs the exhaust gas 60 to recirculate along the exhaust recirculation path 110 from an exhaust outlet 182 of the turbine section 156 to an exhaust inlet 184 into the compressor section 152. Along the exhaust recirculation path 110, the exhaust gas 60 passes through the EG processing system 54 (e.g., the HRSG 56 and/or the EGR system 58) as discussed in detail above.

Again, each combustor 160 in the combustor section 154 receives, mixes, and stoichiometrically combusts the compressed exhaust gas 170, the oxidant 68, and the fuel 70 to produce the additional exhaust gas or products of combustion 172 to drive the turbine section 156. In certain embodiments, the oxidant 68 is compressed by an oxidant compression system 186, such as a main oxidant compression (MOC) system (e.g., a main air compression (MAC) system) having one or more oxidant compressors (MOCs). The oxidant compression system 186 includes an oxidant compressor 188 coupled to a drive 190. For example, the drive 190 may include an electric motor, a combustion engine, or any combination thereof. In certain embodiments, the drive 190 may be a turbine engine, such as the gas turbine engine 150. Accordingly, the oxidant compression system 186 may be an integral part of the machinery 106. In other words, the compressor 188 may be directly or indirectly driven by the mechanical power 72 supplied by the shaft 176 of the gas turbine engine 150. In such an embodiment, the drive 190 may be excluded, because the compressor 188 relies on the power output from the turbine engine 150. However, in certain embodiments employing more than one oxidant compressor is employed, a first oxidant compressor (e.g., a low pressure (LP) oxidant compressor) may be driven by the drive 190 while the shaft 176 drives a second oxidant compressor (e.g., a high pressure (HP) oxidant compressor), or vice versa. For example, in another embodiment, the HP MOC is driven by the drive 190 and the LP oxidant compressor is driven by the shaft 176. In the illustrated embodiment, the oxidant compression system 186 is separate from the machinery 106. In each of these embodiments, the compression system 186 compresses and supplies the oxidant 68 to the fuel nozzles 164 and the combustors 160. Accordingly, some or all of the machinery 106, 178, 180 may be configured to increase the operational efficiency of the compression system 186 (e.g., the compressor 188 and/or additional compressors).

The variety of components of the machinery 106, indicated by element numbers 106A, 106B, 106C, 106D, 106E, and 106F, may be disposed along the line of the shaft 176 and/or parallel to the line of the shaft 176 in one or more series arrangements, parallel arrangements, or any combination of series and parallel arrangements. For example, the machinery 106, 178, 180 (e.g., 106A through 106F) may include any series and/or parallel arrangement, in any order, of: one or more gearboxes (e.g., parallel shaft, epicyclic gearboxes), one or more compressors (e.g., oxidant compressors, booster compressors such as EG booster compressors), one or more power generation units (e.g., electrical generators), one or more drives (e.g., steam turbine engines, electrical motors), heat exchange units (e.g., direct or indirect heat exchangers), clutches, or any combination thereof. The compressors may include axial compressors, radial or centrifugal compressors, or any combination thereof, each having one or more compression stages. Regarding the heat exchangers, direct heat exchangers may include spray coolers (e.g., spray intercoolers), which inject a liquid spray into a gas flow (e.g., oxidant flow) for direct cooling of the gas flow. Indirect heat exchangers may include at least one wall (e.g., a shell and tube heat exchanger) separating first and second flows, such as a fluid flow (e.g., oxidant flow) separated from a coolant flow (e.g., water, air, refrigerant, or any other liquid or gas coolant), wherein the coolant flow transfers heat from the fluid flow without any direct contact. Examples of indirect heat exchangers include intercooler heat exchangers and heat recovery units, such as heat recovery steam generators. The heat exchangers also may include heaters. As discussed in further detail below, each of these machinery components may be used in various combinations as indicated by the non-limiting examples set forth in TABLE 1.

Generally, the machinery 106, 178, 180 may be configured to increase the efficiency of the compression system 186 by, for example, adjusting operational speeds of one or more oxidant compressors in the system 186, facilitating compression of the oxidant 68 through cooling, and/or extraction of surplus power. The disclosed embodiments are intended to include any and all permutations of the foregoing components in the machinery 106, 178, 180 in series and parallel arrangements, wherein one, more than one, all, or none of the components derive power from the shaft 176. As illustrated below, TABLE 1 depicts some non-limiting examples of arrangements of the machinery 106, 178, 180 disposed proximate and/or coupled to the compressor and turbine sections 152, 156.

**TABLE 1**

| **106A** | **106B** | **106C** | **106D** | **106E** | **106F** |
|---|---|---|---|---|---|
| MOC | GEN | | | | |
| MOC | GBX | GEN | | | |
| LP | HP | GEN | | | |
| MOC | MOC | | | | |
| HP | GBX | LP | GEN | | |
| MOC | | MOC | | | |
| MOC | GBX | GEN | | | |
| MOC | | | | | |
| HP | GBX | GEN | LP | | |
| MOC | | | MOC | | |
| MOC | GBX | GEN | | | |
| MOC | GBX | DRV | | | |
| DRV | GBX | LP | HP | GBX | GEN |
| | | MOC | MOC | | |
| DRV | GBX | HP | LP | GEN | |
| | | MOC | MOC | | |
| HP | GBX | LP | GEN | | |
| MOC | CLR | MOC | | | |
| HP | GBX | LP | GBX | GEN | |
| MOC | CLR | MOC | | | |
| HP | GBX | LP | GEN | | |
| MOC | HTR | MOC | | | |
| | STGN | | | | |
| MOC | GEN | DRV | | | |
| MOC | DRV | GEN | | | |
| DRV | MOC | GEN | | | |
| DRV | CLU | MOC | GEN | | |
| DRV | CLU | MOC | GBX | GEN | |

As illustrated above in TABLE 1, a cooling unit is represented as CLR, a clutch is represented as CLU, a drive is represented by DRV, a gearbox is represented as GBX, a generator is represented by GEN, a heating unit is represented by HTR, a main oxidant compressor unit is represented by MOC, with low pressure and high pressure variants being represented as LP MOC and HP MOC, respectively, and a steam generator unit is represented as STGN. Although TABLE 1 illustrates the machinery 106, 178, 180 in sequence toward the compressor section 152 or the turbine section 156, TABLE 1 is also intended to cover the reverse sequence of the machinery 106, 178, 180. In TABLE 1, any cell including two or more components is intended to cover a parallel arrangement of the components. TABLE 1 is not intended to exclude any non-illustrated permutations of the machinery 106, 178, 180. These components of the machinery 106, 178, 180 may enable feedback control of temperature, pressure, and flow rate of the oxidant 68 sent to the gas turbine engine 150. As discussed in further detail below, the oxidant 68 and the fuel 70 may be supplied to the gas turbine engine 150 at locations specifically selected to facilitate isolation and extraction of the compressed exhaust gas 170 without any oxidant 68 or fuel 70 degrading the quality of the exhaust gas 170.

The EG supply system 78, as illustrated in FIG. 3, is disposed between the gas turbine engine 150 and the target systems (e.g., the hydrocarbon production system 12 and the other systems 84). In particular, the EG supply system 78, e.g., the EG extraction system (EGES) 80), may be coupled to the gas turbine engine 150 at one or more extraction points 76 along the compressor section 152, the combustor section 154, and/or the turbine section 156. For example, the extraction points 76 may be located between adjacent compressor stages, such as 2, 3, 4, 5, 6, 7, 8, 9, or 10 interstage extraction points 76 between compressor stages. Each of these interstage extraction points 76 provides a different temperature and pressure of the extracted exhaust gas 42. Similarly, the extraction points 76 may be located between adjacent turbine stages, such as 2, 3, 4, 5, 6, 7, 8, 9, or 10 interstage extraction points 76 between turbine stages. Each of these interstage extraction points 76 provides a different temperature and pressure of the extracted exhaust gas 42. By further example, the extraction points 76 may be located at a multitude of locations throughout the combustor section 154, which may provide different temperatures, pressures, flow rates, and gas compositions. Each of these extraction points 76 may include an EG extraction conduit, one or more valves, sensors, and controls, which may be used to selectively control the flow of the extracted exhaust gas 42 to the EG supply system 78.

The extracted exhaust gas 42, which is distributed by the EG supply system 78, has a controlled composition suitable for the target systems (e.g., the hydrocarbon production system 12 and the other systems 84). For example, at each of these extraction points 76, the exhaust gas 170 may be substantially isolated from injection points (or flows) of the oxidant 68 and the fuel 70. In other words, the EG supply system 78 may be specifically designed to extract the exhaust gas 170 from the gas turbine engine 150 without any added oxidant 68 or fuel 70. Furthermore, in view of the stoichiometric combustion in each of the combustors 160, the extracted exhaust gas 42 may be substantially free of oxygen and fuel. The EG supply system 78 may route the extracted exhaust gas 42 directly or indirectly to the hydrocarbon production system 12 and/or other systems 84 for use in various processes, such as enhanced oil recovery, carbon sequestration, storage, or transport to an offsite location. However, in certain embodiments, the EG supply system 78 includes the EG treatment system (EGTS) 82 for further treatment of the exhaust gas 42, prior to use with the target systems. For example, the EG treatment system 82 may purify and/or separate the exhaust gas 42 into one or more streams 95, such as the CO₂ rich, N₂ lean stream 96, the intermediate concentration CO₂, N₂ stream 97, and the CO₂ lean, N₂ rich stream 98. These treated exhaust gas streams 95 may be used individually, or in any combination, with the hydrocarbon production system 12 and the other systems 84 (e.g., the pipeline 86, the storage tank 88, and the carbon sequestration system 90).

Similar to the exhaust gas treatments performed in the EG supply system 78, the EG processing system 54 may include a plurality of exhaust gas (EG) treatment components 192, such as indicated by element numbers 194, 196, 198, 200, 202, 204, 206, 208, and 210. These EG treatment components 192 (e.g., 194 through 210) may be disposed along the exhaust recirculation path 110 in one or more series arrangements, parallel arrangements, or any combination of series and parallel arrangements. For example, the EG treatment components 192 (e.g., 194 through 210) may include any series and/or parallel arrangement, in any order, of: one or more heat exchangers (e.g., heat recovery units such as heat recovery steam generators, condensers, coolers, or heaters), catalyst systems (e.g., oxidation catalyst systems), particulate and/or water removal systems (e.g., inertial separators, coalescing filters, water impermeable filters, and other filters), chemical injection systems, solvent based treatment systems (e.g., absorbers, flash tanks, etc.), carbon capture systems, gas separation systems, gas purification systems, and/or a solvent based treatment system, or any combination thereof. In certain embodiments, the catalyst systems may include an oxidation catalyst, a carbon monoxide reduction catalyst, a nitrogen oxides reduction catalyst, an aluminum oxide, a zirconium oxide, a silicone oxide, a titanium oxide, a platinum oxide, a palladium oxide, a cobalt oxide, or a mixed metal oxide, or a combination thereof. The disclosed embodiments are intended to include any and all permutations of the foregoing components 192 in series and parallel arrangements. As illustrated below, TABLE 2 depicts some non-limiting examples of arrangements of the components 192 along the exhaust recirculation path 110.

**TABLE 2**

| **194** | **196** | **198** | **200** | **202** | **204** | **206** | **208** | **210** |
|---|---|---|---|---|---|---|---|---|
| CU | HRU | BB | MRU | PRU | | | | |
| CU | HRU | HRU | BB | MRU | PRU | DIL | | |
| CU | HRSG | HRSG | BB | MRU | PRU | | | |
| OCU | HRU | OCU | HRU | OCU | BB | MRU | PRU | |
| HRU | HRU | BB | MRU | PRU | | | | |
| CU | CU | | | | | | | |
| HRSG | HRSG | BB | MRU | PRU | DIL | | | |
| OCU | OCU | | | | | | | |
| OCU | HRSG | OCU | HRSG | OCU | BB | MRU | PRU | DIL |
| | OCU | | OCU | | | | | |
| OCU | HRSG | HRSG | BB | COND | INER | WFIL | CFIL | DIL |
| | ST | ST | | | | | | |
| OCU | OCU | BB | COND | INER | FIL | DIL | | |
| HRSG | HRSG | | | | | | | |
| ST | ST | | | | | | | |
| OCU | HRSG | HRSG | OCU | BB | MRU | MRU | PRU | PRU |
| | ST | ST | | | HE | WFIL | INER | FIL |
| | | | | | COND | | | CFIL |
| CU | HRU | HRU | HRU | BB | MRU | PRU | PRU | DIL |
| | COND | COND | COND | | HE | INER | FIL | |
| | | | | | COND | | CFIL | |
| | | | | | WFIL | | | |

As illustrated above in TABLE 2, a catalyst unit is represented by CU, an oxidation catalyst unit is represented by OCU, a booster blower is represented by BB, a heat exchanger is represented by HX, a heat recovery unit is represented by HRU, a heat recovery steam generator is represented by HRSG, a condenser is represented by COND, a steam turbine is represented by ST, a particulate removal unit is represented by PRU, a moisture removal unit is represented by MRU, a filter is represented by FIL, a coalescing filter is represented by CFIL, a water impermeable filter is represented by WFIL, an inertial separator is represented by INER, and a diluent supply system (e.g., steam, nitrogen, or other inert gas) is represented by DIL. Although TABLE 2 illustrates the components 192 in sequence from the exhaust outlet 182 of the turbine section 156 toward the exhaust inlet 184 of the compressor section 152, TABLE 2 is also intended to cover the reverse sequence of the illustrated components 192. In TABLE 2, any cell including two or more components is intended to cover an integrated unit with the components, a parallel arrangement of the components, or any combination thereof. Furthermore, in context of TABLE 2, the HRU, the HRSG, and the COND are examples of the HE; the HRSG is an example of the HRU; the COND, WFIL, and CFIL are examples of the WRU; the INER, FIL, WFIL, and CFIL are examples of the PRU; and the WFIL and CFIL are examples of the FIL. Again, TABLE 2 is not intended to exclude any non-illustrated permutations of the components 192. In certain embodiments, the illustrated components 192 (e.g., 194 through 210) may be partially or completed integrated within the HRSG 56, the EGR system 58, or any combination thereof. These EG treatment components 192 may enable feedback control of temperature, pressure, flow rate, and gas composition, while also removing moisture and particulates from the exhaust gas 60. Furthermore, the treated exhaust gas 60 may be extracted at one or more extraction points 76 for use in the EG supply system 78 and/or recirculated to the exhaust inlet 184 of the compressor section 152.

As the treated, recirculated exhaust gas 66 passes through the compressor section 152, the SEGR gas turbine system 52 may bleed off a portion of the compressed exhaust gas along one or more lines 212 (e.g., bleed conduits or bypass conduits). Each line 212 may route the exhaust gas into one or more heat exchangers 214 (e.g., cooling units), thereby cooling the exhaust gas for recirculation back into the SEGR gas turbine system 52. For example, after passing through the heat exchanger 214, a portion of the cooled exhaust gas may be routed to the turbine section 156 along line 212 for cooling and/or sealing of the turbine casing, turbine shrouds, bearings, and other components. In such an embodiment, the SEGR gas turbine system 52 does not route any oxidant 68 (or other potential contaminants) through the turbine section 156 for cooling and/or sealing purposes, and thus any leakage of the cooled exhaust gas will not contaminate the hot products of combustion (e.g., working exhaust gas) flowing through and driving the turbine stages of the turbine section 156. By further example, after passing through the heat exchanger 214, a portion of the cooled exhaust gas may be routed along line 216 (e.g., return conduit) to an upstream compressor stage of the compressor section 152, thereby improving the efficiency of compression by the compressor section 152. In such an embodiment, the heat exchanger 214 may be configured as an interstage cooling unit for the compressor section 152. In this manner, the cooled exhaust gas helps to increase the operational efficiency of the SEGR gas turbine system 52, while simultaneously helping to maintain the purity of the exhaust gas (e.g., substantially free of oxidant and fuel).

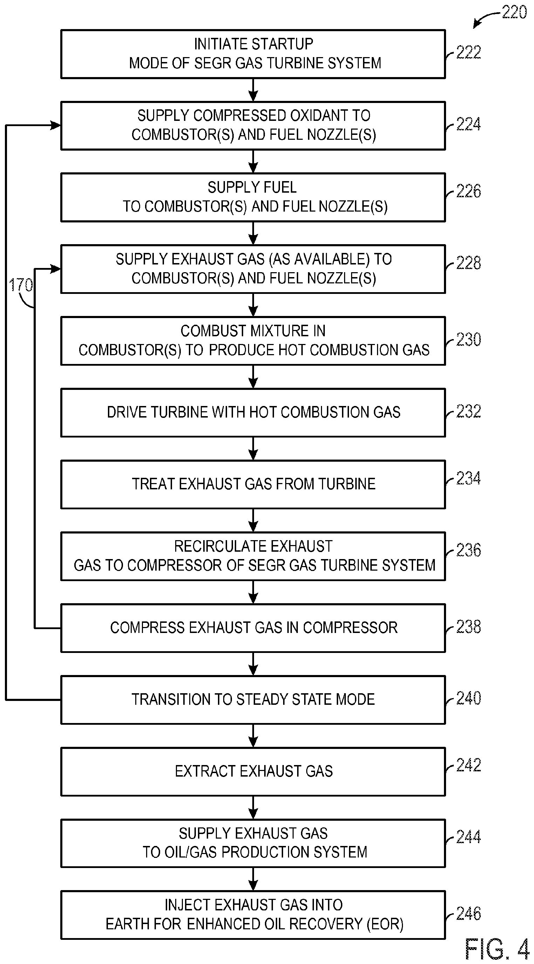

FIG. 4 is a flow chart of an embodiment of an operational process 220 of the system 10 illustrated in FIGS 1-3. In certain embodiments, the process 220 may be a computer implemented process, which accesses one or more instructions stored on the memory 122 and executes the instructions on the processor 120 of the controller 118 shown in FIG. 2. For example, each step in the process 220 may include instructions executable by the controller 118 of the control system 100 described with reference to FIG. 2.

The process 220 may begin by initiating a startup mode of the SEGR gas turbine system 52 of FIGS. 1-3, as indicated by block 222. For example, the startup mode may involve a gradual ramp up of the SEGR gas turbine system 52 to maintain thermal gradients, vibration, and clearance (e.g., between rotating and stationary parts) within acceptable thresholds. For example, during the startup mode 222, the process 220 may begin to supply a compressed oxidant 68 to the combustors 160 and the fuel nozzles 164 of the combustor section 154, as indicated by block 224. In certain embodiments, the compressed oxidant may include a compressed air, oxygen, oxygen-enriched air, oxygen-reduced air, oxygen-nitrogen mixtures, or any combination thereof. For example, the oxidant 68 may be compressed by the oxidant compression system 186 illustrated in FIG. 3. The process 220 also may begin to supply fuel to the combustors 160 and the fuel nozzles 164 during the startup mode 222, as indicated by block 226. During the startup mode 222, the process 220 also may begin to supply exhaust gas (as available) to the combustors 160 and the fuel nozzles 164, as indicated by block 228. For example, the fuel nozzles 164 may produce one or more diffusion flames, premix flames, or a combination of diffusion and premix flames. During the startup mode 222, the exhaust gas 60 being generated by the gas turbine engine 156 may be insufficient or unstable in quantity and/or quality. Accordingly, during the startup mode, the process 220 may supply the exhaust gas 66 from one or more storage units (e.g., storage tank 88), the pipeline 86, other SEGR gas turbine systems 52, or other exhaust gas sources.

The process 220 may then combust a mixture of the compressed oxidant, fuel, and exhaust gas in the combustors 160 to produce hot combustion gas 172, as indicated by block 230. In particular, the process 220 may be controlled by the control system 100 of FIG. 2 to facilitate stoichiometric combustion (e.g., stoichiometric diffusion combustion, premix combustion, or both) of the mixture in the combustors 160 of the combustor section 154. However, during the startup mode 222, it may be particularly difficult to maintain stoichiometric combustion of the mixture (and thus low levels of oxidant and unburnt fuel may be present in the hot combustion gas 172). As a result, in the startup mode 222, the hot combustion gas 172 may have greater amounts of residual oxidant 68 and/or fuel 70 than during a steady state mode as discussed in further detail below. For this reason, the process 220 may execute one or more control instructions to reduce or eliminate the residual oxidant 68 and/or fuel 70 in the hot combustion gas 172 during the startup mode.

The process 220 then drives the turbine section 156 with the hot combustion gas 172, as indicated by block 232. For example, the hot combustion gas 172 may drive one or more turbine stages 174 disposed within the turbine section 156. Downstream of the turbine section 156, the process 220 may treat the exhaust gas 60 from the final turbine stage 174, as indicated by block 234. For example, the exhaust gas treatment 234 may include filtration, catalytic reaction of any residual oxidant 68 and/or fuel 70, chemical treatment, heat recovery with the HRSG 56, and so forth. The process 220 may also recirculate at least some of the exhaust gas 60 back to the compressor section 152 of the SEGR gas turbine system 52, as indicated by block 236. For example, the exhaust gas recirculation 236 may involve passage through the exhaust recirculation path 110 having the EG processing system 54 as illustrated in FIGS. 1-3.

In turn, the recirculated exhaust gas 66 may be compressed in the compressor section 152, as indicated by block 238. For example, the SEGR gas turbine system 52 may sequentially compress the recirculated exhaust gas 66 in one or more compressor stages 158 of the compressor section 152. Subsequently, the compressed exhaust gas 170 may be supplied to the combustors 160 and fuel nozzles 164, as indicated by block 228. Steps 230, 232, 234, 236, and 238 may then repeat, until the process 220 eventually transitions to a steady state mode, as indicated by block 240. Upon the transition 240, the process 220 may continue to perform the steps 224 through 238, but may also begin to extract the exhaust gas 42 via the EG supply system 78, as indicated by block 242. For example, the exhaust gas 42 may be extracted from one or more extraction points 76 along the compressor section 152, the combustor section 154, and the turbine section 156 as indicated in FIG. 3. In turn, the process 220 may supply the extracted exhaust gas 42 from the EG supply system 78 to the hydrocarbon production system 12, as indicated by block 244. The hydrocarbon production system 12 may then inject the exhaust gas 42 into the earth 32 for enhanced oil recovery, as indicated by block 246. For example, the extracted exhaust gas 42 may be used by the exhaust gas injection EOR system 112 of the EOR system 18 illustrated in FIGS. 1-3.

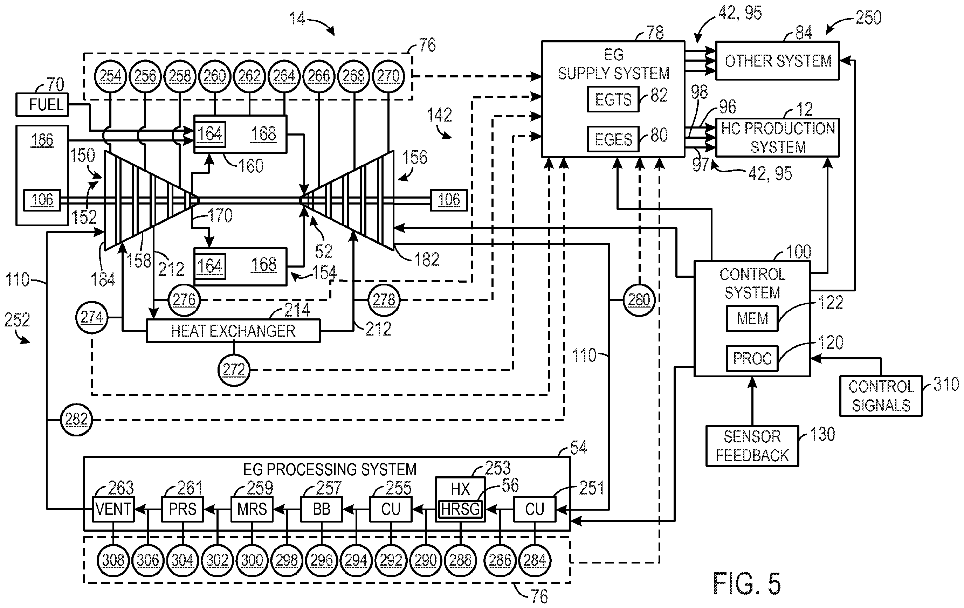

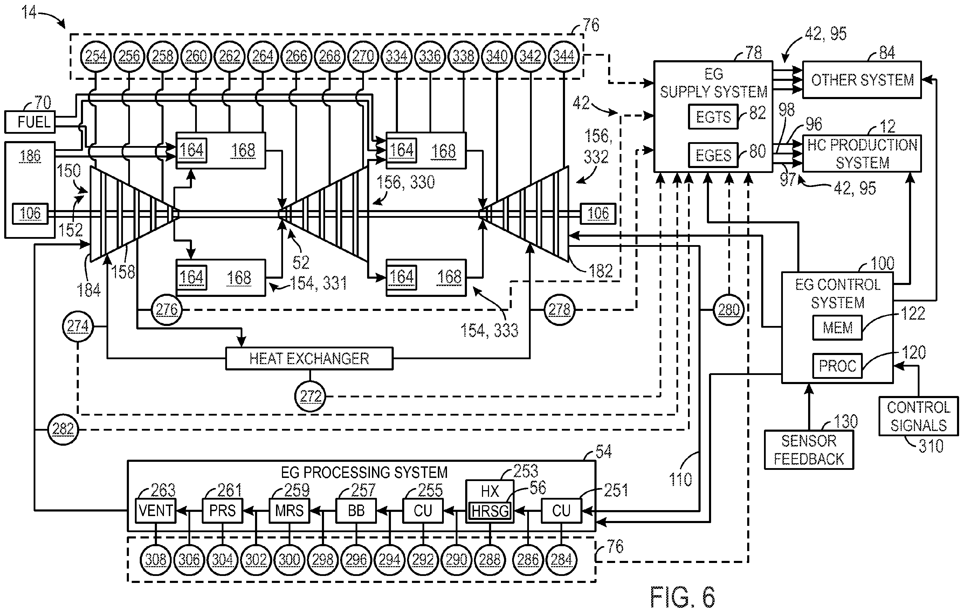

FIGS. 5 and 6 illustrate embodiments of the system 10 with multiple extraction points 76 for extracting the exhaust gas from the EGR system 58. As shown in FIGS. 5 and 6, the disclosed embodiments may extract exhaust gas from one or more of these multiple extraction points 76 (e.g., 1, 2, 3, 4, 5, 6, 7, 8, 9, 10, or more points) along an exhaust gas recirculation path including the gas turbine system 52 and the EG processing system 54. For example, the extraction points 76 may include an exhaust extraction point 76 at or downstream of each compressor stage of the compressor section 152, a plurality of exhaust extraction points 76 associated with one or more combustor sections 154, an exhaust extraction point 76 at or downstream of each turbine stage of one or more turbine sections 156, and/or one or more exhaust extraction points 76 at, upstream, or downstream from various exhaust processing components (e.g., catalyst units, heat exchangers such as heat recovery units or heat recovery steam generators, moisture removal units, particulate removal units, blowers, etc.). Each of these extraction points 76 may be capable of extracting exhaust gas with a gas composition, temperature, pressure, and/or other characteristics (i.e., generally exhaust properties), which may be substantially equal, greater than, or lesser than other extraction points 76. In some embodiments, the extraction points 76 may each have exhaust properties that are suitable for one more downstream processes, and thus each extraction point 76 may be used independently for such downstream processes. In other embodiments, two or more extraction points may be used collectively for one or more downstream processes, either as a mixture or independently. Thus, depending on the demands of the downstream processes, any number of the extraction points 76 may be used to achieve the desired exhaust properties (e.g., pressure, temperature, gas composition, etc.) for the downstream processes.

FIG. 5 is a diagram of an embodiment of the system 10 of FIGS. 1-3, further illustrating multiple extraction points 76 for extracting exhaust gas from the EGR system 58. As discussed briefly above, the EG supply system 78 receives the exhaust gas from one or more of the extraction points 76 (e.g., 1, 2, 3, 4, 5, 6, 7, 8, 9, 10, or more), treats the exhaust gas in the EG treatment system 82, and outputs the treated exhaust gas to one or more downstream processes 250 (e.g., 1, 2, 3, 4, 5, 6, 7, 8, 9, 10, or more). The extraction points 76 may extract the exhaust at equal or different temperatures, pressure, gas compositions, or any combination thereof. These downstream processes 250 may include, for example, the HC production system 12 or other systems 84 (e.g., pipeline 86, storage tank 88, carbon sequestration system 90, etc.) to which treated exhaust gas is provided. Present embodiments of the EGR system 58 include two or more extraction points 76 located along an exhaust gas recirculation (EGR) path 252 of the EGR system 58. The EGR path 252 represents the path through which gases flow through the EGR system 58. That is, each component of the gas turbine system 52, the exhaust recirculation path 110, and the EG processing system 54 are disposed along the EGR path 252. In the illustrated embodiment, the EGR path 58 includes the compressor section 152, the combustor section 154, the turbine section 156, the heat exchanger 214, the lines 212, the exhaust recirculation path 110, and the EG processing system 54.

As discussed above, the EG processing system 54 may include any number and combination of components designed to treat the exhaust gas as it flows from the turbine section 156 to the compressor section 152. These different components, and their specific uses, are described at length above. Several possible combinations of such EG processing components are outlined in TABLE 2. With this in mind, the illustrated embodiment shows one possible arrangement of components used to treat the exhaust gas within the EG processing system 54. Specifically, the illustrated embodiment includes a catalyst unit (CU) 251, heat exchanger (HX) 253 (e.g., including the HRSG 56), another CU 255, a booster blower (BB) 257, a moisture removal system (MRS) 259, a particle removal system (PRS) 261, and a vent 263. The following discussion relates to the selection of extraction points 76 from different positions along the EGR path 252, which may include the components of the EG processing system 54. Thus, it should be understood that the techniques applied for selection and activation of such extraction points 76 along the EGR path 252 are not limited to the specific types or arrangements of EG processing system components illustrated in FIG. 5.

The two or more extraction points 76 may be positioned or selected to provide the exhaust gas 66 at a desired pressure. This desired pressure may be defined based on an upper pressure threshold, a lower pressure threshold, or both (e.g., within a pressure range). For example, each downstream process 250 may have a minimum pressure demand, which is established by the process. It may be desirable to extract the exhaust gas 66 at or above this minimum pressure, so that no additional compression is required between extracting the exhaust gas 66 and providing it to the downstream process 250. This allows the EG supply system 78 to provide treated exhaust gas to the downstream process 250 at a reduced cost, due to the lack of additional compressive steps or hardware (e.g., booster compressor).

The EG supply system 78 may provide treated exhaust gas to one or more downstream processes 250, delivering the exhaust gas with a desired physical property to each downstream process 250. In some embodiments, this involves the EG supply system 78 providing treated exhaust gas to one or more of the downstream processes 250 at a desired pressure and/or a desired temperature. For example, the EG supply system 78 may output the exhaust gas to multiple downstream processes 250 (e.g., 2, 3, 4, 5, 6, 7, 8, 9, 10, or more), each at a different pressure. In some embodiments, the supply system 78 may output treated exhaust gas to a single downstream process 250 by combining two or more streams (e.g., 2, 3, 4, 5, 6, 7, 8, 9, 10, or more) of exhaust gas at different pressures to meet the pressure demand (e.g., upper threshold, lower threshold, or range). In other embodiments, the EG supply system 78 may output treated exhaust gas to a single downstream process 250 by combining two or more streams of exhaust gas at the same pressure, but at different temperatures (or some other property), to meet the pressure demand and a temperature demand (e.g., upper threshold, lower threshold, or range). In still other embodiments, the EG supply system 78 may output two or more streams of exhaust gas to a single downstream process 250, each of the streams taken from different extraction points 76 at different times, based on an operational state of the gas turbine system 52.

The illustrated embodiment shows several potential locations of the extraction points 76 that may provide exhaust gas, extracted from the EGR path 252, to the EG supply system 78. In present embodiments, there may be any number (e.g., 2, 3, 4, 5, 10, 15, 20, or more) of the extraction points 76 disposed along the EGR path 252 of the EGR system 58. As shown in FIG. 5, one or more of the extraction points 76 may be located at different positions along the compressor section 152, the combustor section 154, and/or the turbine section 156. For example, an extraction point 254 is shown in a forward portion of the compressor section 152 (e.g., just downstream of the exhaust inlet 184). Similarly, an extraction point 256 may be located in the mid portion of the compressor section 152, and an extraction point 258 may be located in a discharge portion of the compressor section 152. In an embodiment, there may be separate extraction points 76 located downstream of each compressor stage of the compressor section 152. For example, the compressor section 152 may include 1 to 30, 5 to 20, or 10 to 15 stages, each stage having an associated extraction point 76. Extraction points 260, 262, and 264 may be located at different positions along the combustor section 168, and extraction points 266, 268, and 270 may be located at forward, mid, and aft portions of the turbine section 170, respectively. In an embodiment, there may be separate extraction points 76 located downstream of each turbine stage of the turbine section 156. For example, the turbine section 156 may include 1 to 30, 5 to 20, or 10 to 15 stages, each stage having an associated extraction point 76. There may be more or fewer extraction points 76 located in or between components of the gas turbine system 52. For example, extraction points 272, 274, 276, and 278 may be positioned at different locations within the heat exchanger 214 and the lines 212 running through the heat exchanger 214. In addition, the extraction points 76 may be located along the exhaust recirculation path 110, such as extraction points 280 and 282 in the illustrated embodiment, or within the EG processing system 54. Extraction points 284, 286, 288, 290, 292, 294, 296, 298, 300, 302, 304, 306, and 308, in the illustrated embodiment, are disposed within and between each of the components 251, 253, 255, 257, 259, 261, and 263 of the EG processing system 54. Again, these components are a non-limiting example of components that may be represented by the blocks 194, 196, 198, 200, 202, 204, 206, 208, and 210 of FIG. 3. Other combinations and arrangements (e.g., serial and/or parallel) of such components may be possible with the extraction points 76 located therein or therebetween. Any other number or location of extraction points 76 may be utilized to extract the desired exhaust gas from the EGR path 252 based on the operational state of the gas turbine system 52 and/or a physical property of the exhaust gas.

It may be desirable for the extracted exhaust gases to result from stoichiometric operation of the EGR system 58, as discussed in detail with reference to FIG. 1. To that end, the extraction points 76 may each be located relatively downstream of any combustion processes, treatments, or reactions (e.g., catalytic reactions) taking place in the EGR system 58. Specifically, the extraction points 76 located in the combustor section 154 (e.g., extraction points 260, 262, and 264) may be located along a casing (e.g., compressor discharge casing) that is adjacent to, but not part of, the combustion portion 168. As a result, the extracted exhaust gas may include little or no oxidant 68 or fuel 70. As discussed previously, there may be an acceptable range for the equivalence ratio of the oxidant 68 and the fuel 70 in the exhaust gas that is output to the downstream process 250. For example, in the context of the HC production system 12, it may be desirable to have no excess oxidant 68 or fuel 70 in the exhaust gas, so that a maximum concentration of CO₂ may be separated out of the exhaust gas for injection into the earth via the EOR system 18.

By including multiple extraction points 76 throughout the EGR system 58, it is possible to tailor the exhaust gas output to meet specific process demands. For example, the exhaust gas may be extracted via different extraction points 76 for different downstream processes 250, or during different modes of operation of the EGR system 58. In some embodiments, the downstream process 250 may operate effectively only when extracted exhaust gas is supplied within an acceptable range of exhaust gas pressures, temperatures, gas compositions, or other properties. Gas composition may be a percent by weight of various gases, such as carbon dioxide, carbon monoxide, nitrogen oxides, sulfur oxides, particulate matter, unburnt fuel, oxidant (e.g., oxygen), moisture, etc. Each of the locations of the extraction points 76 shown in FIG. 5 may provide the exhaust gas to the EG supply system 78 at a certain temperature, pressure, gas composition, etc., depending on the mode of operation of the EGR system 58. For example, exhaust gas extracted directly from the gas turbine system 52 (e.g., extraction points 254, 256, 258, 260, 262, 264, 266, 268, or 270) may have a relatively high pressure and temperature due to the pressurized flow of gas through the gas turbine system 52. In addition, the temperature and pressure of the exhaust gas may increase as it flows past the extraction points 254, 256, and 258 of the compressor section 152, e.g., as one or more compressor stages progressively compress the exhaust gas. Similarly, the temperature and pressure of the exhaust gas may progressively increase as it flows past the extraction points 260, 262, and 264 of the combustor section 154 (e.g., due to combustion). The temperature and pressure of the exhaust gas may progressively decrease as it flows past the extraction points 266, 268, and 270 of the turbine section 156, as the exhaust gas expands and drives one or more turbine stages in the turbine section 156.

Exhaust gas extracted from the EG processing system 54 (e.g., extraction points 284, 286, 288, 290, 292, 294, 296, 298, 300, 302, 304, 306, and 308) may have a relatively lower pressure, but a wider range of temperatures and gas compositions, depending on the components of the EG processing system 54. As described at length with reference to FIG. 3, there may be any number of different components within the EG processing system 54 that treat the exhaust gas as it is recirculated from the turbine section 156 back to the compressor section 152. The arrangement of components in the EG processing system 54 of FIG. 5 is exemplary, for the purpose of describing possible combinations of the exhaust gas extractions. Other combinations or arrangements of such components may be possible.

In certain embodiments, the terms low, medium, and high (e.g., as used with regard to the temperatures, pressures, concentration levels, and other exhaust gas properties) may be used for comparison purposes with regard to one another. For example, the medium temperatures may be at least 10 to 500 degrees Celsius (or 1 to 100 percent) greater than the low temperatures, and the high temperatures may be at least 10 to 500 degrees Celsius (or 1 to 100 percent) greater than the medium temperatures. In some embodiments, low temperatures may be considered any temperature less than 40 degrees Celsius, medium temperatures may be any temperature from 40 to 150 degrees Celsius, and high temperatures may be any temperature above 150 degrees Celsius. Likewise, the medium pressures may be at least 10 to 200 psi (or 1 to 100 percent) greater than the low pressures, and the high pressures may be at least 10 to 200 psi (or 1 to 100 percent) greater than the medium pressures. In some embodiments, low pressures may be considered any pressure less than 30 psi, medium pressures may be any pressure from 30 to 100 psi, and high pressures may be any pressure above 100 psi. Furthermore, with regard to the extraction points, reference to exhaust extraction at similar or substantially equal pressures may refer to ranges of approximately 0 to 10, 0 to 25, or 0 to 50 psi, or pressures plus or minus approximately 5, 10, 15, 20, or 25 psi, or pressures plus or minus approximately 0 to 10, 0 to 5, or 0 to 2.5, or 0 to 1 percent. Likewise, reference to exhaust extraction at similar or substantially equal temperatures may refer to ranges of approximately 0 to 200, 0 to 100, 0 to 50, or 0 to 10 degrees Celsius, or temperatures plus or minus approximately 5, 10, 15, 20, 25, 50, or 100 degrees Celsius, or temperatures plus or minus approximately 0 to 10, 0 to 5, or 0 to 2.5, or 0 to 1 percent. Furthermore, the exhaust extraction points (e.g., 2, 3, 4, 5, 6, 7, 8, 9, 10, or more extraction points) may acquire the exhaust gas at incremental pressures ranges of approximately 1 to 50, 5 to 25, or 15 to 20 psi, incremental temperature ranges of approximately 1 to 200, 20 to 100, or 30 to 50 degrees Celsius, or any combination thereof, wherein each incremental range is greater than the previous range. In this manner, the exhaust extraction points may cover a broad range of temperatures, pressures, and/or gas compositions, and each extracted exhaust gas stream may be used independently or collectively (e.g., mixed with other extractions) for various downstream processes.

Each of the extraction points 76 may route the exhaust gas at certain ranges of pressures, temperatures, and gas compositions (e.g., equal, similar, or different from one another) to the EG supply system 78 based on where the extraction points 76 are located along the EGR path 252. As illustrated below, TABLE 3 depicts some non-limiting examples of output properties of the exhaust gas extracted from each of the extraction points 76 shown in the embodiment of FIG. 5. Although only the pressure and temperature variations at the different extraction points 76 are described in TABLE 3, it should be noted that changes in exhaust gas composition may be possible as well, especially with regard to components of the EG processing system 54 (e.g., CU, MRS, PRS, etc.).

**TABLE 3**

| **Extraction point** | **Location** | **Output properties** |
|---|---|---|
| 254 | forward compressor casing (152) | low pressure, low temp |
| 256 | middle compressor casing (152) | medium pressure, low-medium temp |
| 258 | compressor discharge casing (152) | high pressure, medium-high temp |
| 260 | combustor casing at head end portion (154) | medium-high pressure, medium temp |
| 262 | combustor casing between liner and flow sleeve (154) | medium-high pressure, medium-high temp |
| 264 | combustor casing at transition piece (154) | medium pressure, high temp |
| 266 | forward turbine casing at high pressure turbine stages (156) | high pressure, high temp |
| 268 | mid turbine casing at middle pressure turbine stages (156) | medium pressure, high temp |
| 270 | turbine discharge casing at low pressure turbine stages (156) | low pressure, high temp |
| 272 | heat exchanger 214 | medium pressure, low-high temp |
| 274 | line from heat exchanger 214 to compressor inlet 184 or low pressure compressor stages | medium pressure, low temp |
| 276 | line 212 from compressor 152 to heat exchanger 214 | medium-high pressure, medium temp |
| 278 | line 212 from heat exchanger 214 to turbine 156 | medium pressure, low temp |
| 280 | EGR path 110 from turbine 156 to EG processing system 54 | low pressure, high temp |
| 282 | EGR path 110 from EG processing system 54 to compressor 152 | low pressure, low temp |
| 284 | CU 251 | low pressure, medium-high temp |
| 286 | between CU 251 and HRSG 56 | low pressure, medium temp |
| 288 | HRSG 56 | low pressure, medium-low temp |
| 290 | between HRSG 56 and CU 255 | low pressure, low temp |
| 292 | CU 255 | low pressure, medium temp |
| 294 | between CU 255 and BB 257 | low pressure, medium temp |
| 296 | BB 257 | low-medium pressure, low-medium temp |
| 298 | between BB 257 and MRS 259 | medium pressure, medium temp |
| 300 | MRS 259 | medium pressure, low-medium temp |
| 302 | between MRS 259 and PRS 261 | medium pressure, low-medium temp |
| 304 | PRS 261 | low-medium pressure, low-medium temp |
| 306 | between PRS 261 and vent 263 | low pressure, low-medium temp |
| 308 | Vent 263 | low pressure, low-medium temp |

Any of these extraction points 76 may be selected to provide exhaust gas with an appropriate range of properties (e.g., pressure, temperature, and gas composition) for use in a downstream process 250. Since there are multiple extraction points 76 in the disclosed embodiments, it may be possible for extractions from the EGR system 58 to feed multiple downstream processes 250 at the same time, each downstream system having similar or differing pressure, temperature, and gas composition demands.

In some embodiments, there may be fewer extraction points 76 than those in the illustrated embodiment. In such instances, it may be possible to combine extractions from two or more (e.g., 2, 3, 4, 5, 6, 7, 8, 9, 10, or more) existing extraction points 76 to provide exhaust gas to the downstream process 250 that would not be possible with a single extraction. Different combinations of exhaust gas extractions may be utilized to provide treated exhaust gas to one or more downstream processes 250 within a desired range of pressures, temperatures, gas compositions, and other properties. As illustrated below, TABLE 4 depicts some non-limiting examples of combinations of extraction points 76 that may yield desirable exhaust gas properties for a given downstream process 250.

**TABLE 4**

| **1^{st} extraction point** | **2^{nd} extraction point** | **Output properties** |
|---|---|---|
| 258 | 268 | medium-high pressure medium-high temp |
| 256 | 268 | medium pressure medium-high temp |
| 256 | 280 | low-medium pressure low-high temp |
| 278 | 290 | low-medium pressure low temp |
| 258 | 308 | low-high pressure low-high temp |

As shown above, some combinations may yield exhaust gas with a small range of pressures and a large range of temperatures, with a small range of temperatures and a large range of pressures, or a small or large range of both temperatures and pressures. Other combinations may be utilized to provide the same or different ranges in pressure and temperature, based on the arrangement of components (e.g., EG processing system components), as well as the number and locations of extraction points 76 within the EGR system 58. Although the table shows combinations of only two extractions, other numbers of extractions (e.g., 3, 4, 5, 6, or more) may be combined to yield the desired properties.

The control system 100 may control the extractions of exhaust gas via the extraction points 76. For example, the control system 100 may operate valves leading from each of the extraction points 76 to selectively provide one or more extractions of exhaust gas from the EGR system 58 to the EG supply system 78. Such valves, as described in detail below, may be part of the EGES 80 in the EG supply system 78. The control system 100 may control the EGES 80 to provide the exhaust gas to one or more of the downstream processes 250 at the desired pressure, temperature, and/or gas composition, based on sensor feedback 130 and/or control signals 310. In some embodiments, for example, the control system 100 may determine the pressure, temperature, and/or gas composition demands (e.g., upper thresholds, lower thresholds, or ranges) of the downstream processes 250 based on the control signals 310 from the downstream process 250. These control signals 310 may be determined based on operator inputs, system inputs, and feedback from sensors in the downstream process 250. The control system 100 also may receive sensor feedback 130 indicative of the pressures, temperatures, gas compositions, or other properties of the exhaust gas available from each of the extraction points 76 of the EGR system 58. The control system 100 may then determine an appropriate combination of extraction points 76 for providing the exhaust gas to the EG supply system 78 at a desired temperature, pressure, gas compositions, etc., and execute instructions to control valve operation accordingly.

FIG. 6 is a diagram of another embodiment of the EGR system 58 of FIGS. 1-3, illustrating the gas turbine system 52 having two combustion sections 154 and two turbine sections 156. The relatively upstream turbine section 156 may be a high pressure turbine section 330, and the relatively downstream turbine section 156 may be a low pressure turbine section 332. The use of multiple combustion sections 154 (e.g., upstream combustion section 331 and downstream combustion section 333) and turbine sections 156 may enable more efficient operation of the gas turbine system 52. Both combustion sections 154 may receive the fuel 70 and the oxidant 68 from the same source, as illustrated. However, in other embodiments, the combustion sections 154 may receive the fuel 70 and/or the oxidant 68 from separate sources. Exemplary arrangements of such gas turbine systems 52 having multiple combustion and turbine sections are described in U.S. Patent Application Serial No. 13/445,003, entitled "METHODS, SYSTEMS, AND APPARATUS RELATING TO COMBUSTION TURBINE POWER PLANTS WITH EXHAUST GAS RECIRCULATION," to Wichmann et al., filed on April 12, 2012.

In the illustrated embodiment, the extraction points 76 may be present within both combustion sections 154 and both turbine sections 156. More specifically, in addition to the extraction points 76 shown in FIG. 5, the EGR system 58 may include additional extraction points 334, 336, 338, 340, 342, and 344. The exhaust gases flowing past these extraction points 334, 336, 338, 340, 342, and 344 may have a relatively lower pressure than those flowing past the corresponding extraction points 260, 262, 264, 266, 268, and 270, which are located in the upstream combustion section 154, 331 and the high pressure turbine section 156, 330.

In some embodiments, the combustion of exhaust gas, fuel, and oxidant occurring in one of the combustion sections 154 may be at the desired equivalence ratio (e.g., between approximately 0.95 to 1.05), while the combustion occurring in the other combustion section 154 may not be at the desired equivalence ratio. For example, the combustion section 331 may operate at an equivalence ratio of approximately 1 (e.g., stoichiometric equivalence ratio), while the combustion section 333 may operate in a fuel rich or fuel lean state, or vice versa. By further example, the combustion section 331 may operate with an equivalence ratio of greater than 1.0 (e.g., fuel-rich), thereby substantially or entirely consuming the oxidant 68 (e.g., oxygen), while the combustion section 333 may operate with an equivalence ratio of less than 1.0 (e.g., fuel-lean) to consume the remaining fuel (e.g., by adding additional oxidant 68). In such instances, it may be desirable for the EGR system 58 to only use the extraction points 76 (e.g., 260, 262, 264, 266, 268, and/or 270) located at or downstream of the combustion section 154 (e.g., 331) or the combustion section 154 (e.g., 333) depending on the equivalence ratio. If the combustion section 154 operating at the desired equivalence ratio (e.g., approximately 0.95 to 1.05, or about 1.0) switches (e.g., from combustion section 331 to combustion section 333), the control system 100 may utilize different extraction points 76 (e.g., 334, 336, 338, 340, 342, 344, 280, 284, 286, 288, 290, 292, 294, 296, 298, 300, 302, 304, 306, 308, 282, 254, 256, 258, 274, 276, 272, and/or 278), which are downstream of combustion section 333 and upstream of combustion section 331, to remove exhaust gas from the EGR system 58. The control system 100 may detect changes in the stoichiometric operation of the gas turbine system 52 via sensor feedback 130. The sensor feedback 130 may be indicative of the composition of the exhaust gas output from one or both of the combustion sections 154, or indicative of flow rates of the oxidant 68 and the fuel 70 provided to each of the combustor sections 154.

As discussed at length above, the HC production system 12 may operate most effectively with the exhaust gas having an equivalence ratio of approximately 1, so that no excess fuel 70 or oxidant 68 remains in the exhaust gas used in the subterranean reservoir 20 during enhanced oil recovery operations. However, in some embodiments, one or more of the downstream processes 250 (e.g., the other systems 84) may utilize exhaust gas produced through nonstoichiometric (e.g., fuel rich or fuel lean) combustion. In such embodiments, it may be possible for the EGR system 58 to provide two or more separate flows of exhaust gas (some produced via stoichiometric operation, and others through nonstoichiometric operation) to the EG supply system 78 for treatment and output toward different downstream processes 250. Thus, the multiple extraction points 76 may be utilized to provide exhaust gas from the same EGR system 58 to two or more downstream processes 250 with differing demands for the equivalence ratio of combustion with the oxidant 68 and with the fuel 70 (e.g., leading to different gas compositions).

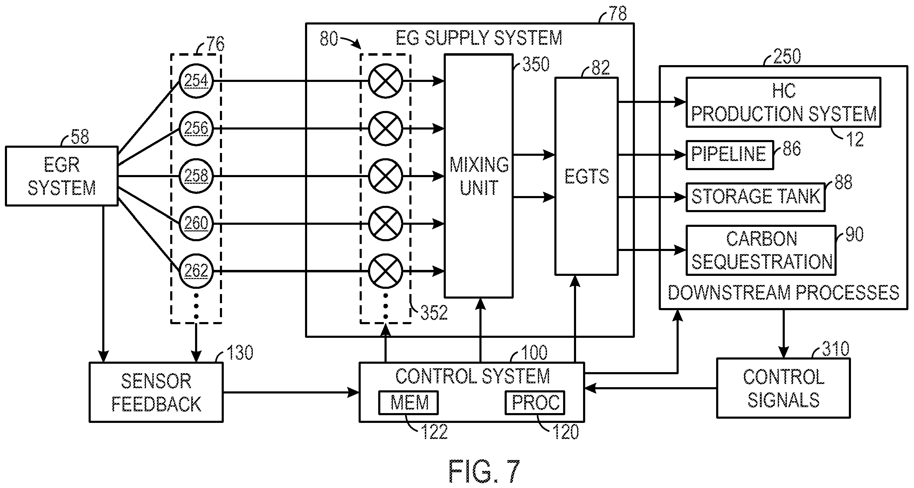

FIG. 7 is a diagram of an embodiment of the EG supply system 78 of FIGS. 3, 5, and 6. In the illustrated embodiment, the EG supply system 78 includes a mixing unit 350 for combining multiple extractions of the exhaust gas received from the EGR system 58 via the extraction points 76. As noted above, the EGES 80 of the EG supply system 78 may include valves 352 that, when opened, facilitate extraction of exhaust gas from the corresponding extraction points 76 of the EGR system 58. Each of the valves 352 may be controllable to 2, 3, 4, 5, or more positions, including a closed position for not extracting any exhaust gas via the corresponding extraction point 76. In some embodiments, the valves 352 may be continuously controllable, such that the control system 100 may actuate the valves 352 to any desired amount of opening (e.g., between fully opened and fully closed).

The valves 352 may be located together at a distal position relative to their corresponding extraction points 76, as shown in the illustrated embodiment. In other embodiments, the valves 352 may be located near or immediately adjacent their respective extraction points 76 along the EGR system 58. As mentioned previously, the control system 100 may actuate the valves 352 to extract exhaust gas from one or more of the extraction points 76 at a given time. For example, the control system 100 may send a control signal to move one or more of the valves 352 from a closed position to an open position, thereby introducing an extracted flow of exhaust gas from the EGR system 58 to the EG supply system 78 via the selected extraction points 76. The control system 100 may select the extraction points 76 based on pressure, temperature, gas composition, or other demands of the downstream process 250 (communicated via the control signals 310) and based on corresponding properties of the available exhaust gas (communicated via the sensor feedback 130). The mixing unit 350 may include multiple mixing chambers for mixing different exhaust gas streams from the multiple extraction points 76. The mixing unit 350 may supply the combined streams of exhaust gas to the EGTS 82 for treatment (e.g., separation of N₂ and CO₂), before the treated exhaust gas (e.g., N₂ or CO₂) is sent to one or more of the downstream processes 250. In an embodiment, the valves 352 may include multiple stages of valves, so that the exhaust gas available from one of the extraction points 76 may be provided to multiple downstream processes 250. More specifically, the exhaust gas from one of the extraction point 76 may be split into two or more exhaust gas streams, combined with one or more other extractions via separate mixing chambers, and provided to two or more of the downstream processes 250.

The illustrated embodiment includes the mixing unit 350 located relatively upstream of the EGTS 82, so that the exhaust gas is combined (e.g., via the mixing unit 350) before it is treated (e.g., via the EGTS 82). In other embodiments, however, the exhaust gas from the multiple extraction points 76 may be treated (e.g., via the EGTS 82), and then mixed (e.g., via the mixing unit 350) to produce one or more combined and treated gas flows. Although not shown, the EG supply system 78 may include, in addition to the mixing unit 350 and the EGTS 82, a compressor or blower configured to pressurize the flow of exhaust gases from the extraction points 76 toward the downstream process 250. In some embodiments, such compression equipment may be included as part of the EGTS 82 that treats the extracted gas.

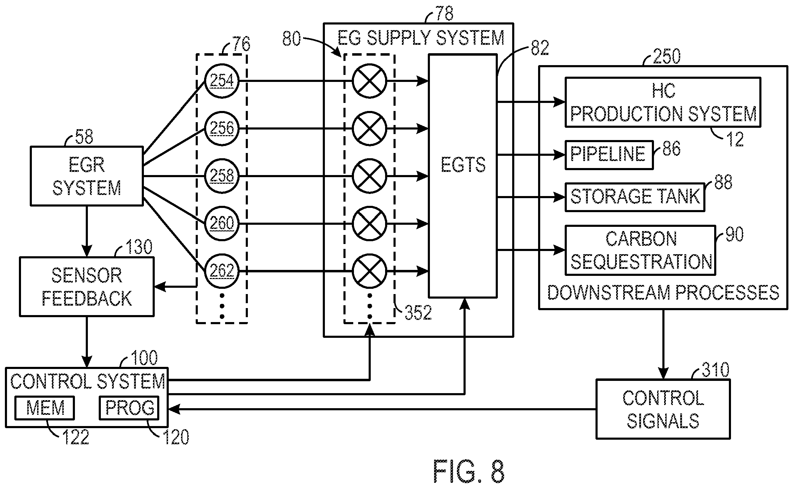

FIG. 8 is a diagram of another embodiment of the EG supply system 78. In the illustrated embodiment, the EG supply system 78 does not include a mixing unit 350 for combining the exhaust gas extracted from the different extraction points 76. Instead, the EG supply system 78 may treat multiple extractions of exhaust gas separately, and provide each of the treated exhaust gas streams to a different downstream process 250. In some embodiments, multiple different streams of the extracted and treated exhaust gas may be provided to the same downstream process 250 (e.g., HC production system 12). For example, the HC production system 12 may include multiple EOR systems 18, each having a different pressure demand for N₂ or CO₂ provided via the EG supply system 78. Thus, the EGTS 82 may separate N₂ and CO₂ from two streams of exhaust gas, taken from the extraction points 254 and 256, and output the two separate streams of N₂ and/or CO₂ to the HC production system 12 for enhanced oil recovery.

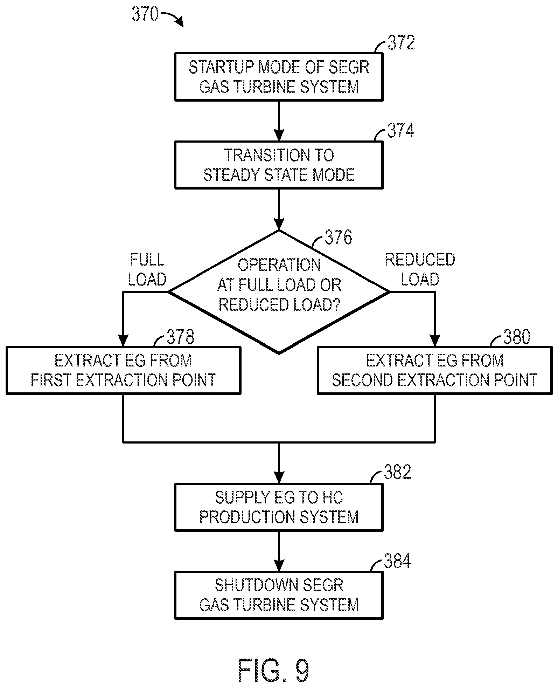

FIG. 9 is a flow chart of an embodiment of a method 370 for operating the system of FIGS. 5-8. The method 370 includes various blocks that may be implemented via the control system 100. More specifically, the method 370 may be implemented as a computer or software program (e.g., code or instructions) that may be executed by the processor 120 to execute one or more of the steps of the method 370. Additionally, the program (e.g., code or instructions) may be stored in any suitable article of manufacture that includes at least one tangible non-transitory, computer-readable medium that at least collectively stores these instructions or routines, such as the memory 122 or another storage component of the control system 100. The term non-transitory indicates that the medium is not a signal.

The method 370 includes operating in a startup mode (block 372) of the SEGR gas turbine system 52. During startup mode, the EGR system 58 may not be circulating exhaust gas at a desired rate or pressure for extraction. In addition, the EGR system 58, in startup mode, may not produce exhaust gas with a pressure, temperature, and/or gas composition within certain thresholds for the downstream processes 250. For example, during startup, it may be more difficult to achieve stoichiometric combustion. Therefore, instead of using exhaust gas extracted from the EGR system 58 via one or more extraction points 76, the downstream processes 250 (e.g., the HC production system 12) may operate using treated exhaust gas (e.g., N₂ or CO₂) received from other sources (e.g., separate storage tank, pipeline, or chemical production process, etc.). For example, during the startup mode of the gas turbine system 52, the HC production system 12 may receive N₂, CO₂, or exhaust gas from a storage tank, where the gas is stored at or above a minimum pressure for the EOR application. The method 370 then includes transitioning (block 374) the EGR system 58 to a steady state mode of operation. This transition may be complete once the amount of exhaust gas being recycled through the EGR path 252 reaches a steady state. The startup and transition of the EGR system 58 may be monitored via sensors located along the EGR path 252 to measure the parameters of exhaust gas (e.g., flow rate, pressure, temperature, gas composition, etc.). The transition may also include transitioning from using outside sources of N₂, CO₂, or exhaust gas, to extracting the exhaust gas from the EGR system 58 (e.g., by opening one or more of the valves 352) and separating the N₂ and CO₂ from the extracted exhaust gas via the EGTS 82.

In some embodiments, the gas turbine system 52 may operate at different loads while in a steady state mode. That is, the gas turbine system 52 may reach a steady state mode while providing only enough power to operate a portion of the machinery 106 connected to the gas turbine system 52. This may be the case when not all of the machinery 106 coupled to the gas turbine engine 52 is being used. This may be referred to as reduced load operation, or turndown operation. The same gas turbine system 52, however, may operate at full load capacity at a steady state as well. This full load operation may represent the case when all of the machinery 106 coupled to the gas turbine engine is being utilized, so more power is produced via the combustion to operate the machinery 106. The method 370 may include determining (block 376) whether the gas turbine engine 52 is operating at full load or at a reduced load. Such a determination may be made based on the sensor feedback 130 or any number of sensor inputs or operator inputs to the EGR system 58. Based on this determination, the method 370 may include extracting (block 378) the exhaust gas from a first extraction point 76 during full load operation, and extracting (block 380) the exhaust gas from a second extraction point 76 during reduced load operation. The different extraction points 76 (e.g., first and second extraction points 76) used during full load operation and during reduced load operation may be chosen to meet certain thresholds or ranges of pressure, temperature, gas composition, etc. appropriate for the downstream process 250. The method 370 may then supply (block 382) the extracted exhaust gas to the HC production system 12 for performing enhanced oil recovery. The method 370 also may include shutting down (block 384) the gas turbine system 52. The gas turbine system 52 may be shut down when there is no longer a load on the system, or when the system is being serviced. During the shutdown, the system 10 may transition back to using other exhaust gas sources, such as storage tanks, pipelines, etc.

During the steady state mode, the exhaust gas may be extracted via different extraction points 76 based on the load on the gas turbine system 52. The different extractions may be provided to the same downstream process 250 (e.g., HC production system 12 for EOR) at different times, based on the load. The working fluid (e.g., exhaust gas) flowing through the EGR path 252 may be at its highest pressure coming from the compressor section 152 when operating at the full load. When operating at the reduced load, the working fluid flowing through the EGR path 252 may not be compressed to such a high pressure via the compressor section 152, because less mass flow through the gas turbine system 52 is used to support the reduced load. It may be desirable to maintain the extraction pressure of the exhaust gas taken from the EGR system 58 and provided to the downstream process 250 via the EG supply system 78. Therefore, it may be desirable to extract the exhaust gas from an extraction point with a relatively higher pressure than other extraction points during the reduced load operation, and to extract the exhaust gas from an extraction point with a relatively lower pressure than other extraction points during the full load operation. In this way, the system 10 is able to maintain certain pressures of the extracted exhaust gas despite the gas turbine system 52 operating at different loads. In general, the extraction point 76 used at reduced load may be closer to the inlet of the combustor section 154 than the extraction point 76 used at full load. As illustrated below, TABLE 5 depicts some non-limiting examples of combinations of extraction points 76 (from FIGS. 5 and 6) that may yield the same properties for the downstream process 250 when the gas turbine system 52 operates at different loads.

**TABLE 5**

| **Extraction point at full load** | **Extraction point at reduced load** |
|---|---|
| 254 | 258 |
| 270 | 266 |
| 254 | 270 |
| 266 | 258 |
| 344 | 340 |
| 270 | 340 |
| 340 | 258 |

Presently disclosed embodiments are directed toward an EGR system 58 with multiple extraction points 76 for extracting recirculated exhaust gas from EGR path 252. Ultimately, such multiple extraction points 76 may enable a customer to provide, via a single installation of the EGR system 58, exhaust gas with a relatively high concentration of N₂ or CO₂ to one or more downstream processes 250 with varying supply demands. In some embodiments, the EGR system 58 may provide the exhaust gas via two extraction points 76, each extraction providing N₂ or CO₂ to a different HC production system 12 for enhanced oil recovery. Specifically, when used to remove oil from subterranean reservoirs 20, two or more well locations with different minimum pressure demands may be satisfied using the same EGR system 58. In other embodiments, multiple extractions of the exhaust gas may be combined to meet the appropriate pressure, temperature, gas composition, and/or other demands of one or more downstream processes 250. In still other embodiments, the multiple extraction points 76 allow the same EGR system 58 to provide exhaust gas extractions to the downstream process 250 at a consistent pressure when the gas turbine system 52 is operating at different loads.

This written description uses examples to disclose the invention, including the best mode, and also to enable any person skilled in the art to practice the invention, including making and using any devices or systems and performing any incorporated methods. The patentable scope of the invention is defined by the claims.

## Claims

1. A system (52), comprising:
a turbine combustor (160);
a turbine driven by combustion products from the turbine combustor;
an exhaust gas compressor (158), wherein the exhaust gas compressor is configured to compress and route a combustion exhaust gas from the turbine to the turbine combustor;
an exhaust gas recirculation (EGR) path (110) extending through the exhaust gas compressor, the turbine combustor, and the turbine;
a recirculation conduit configured to direct an outflow of the combustion exhaust gas from the turbine as an inflow of the combustion exhaust gas to the exhaust gas compressor;
a first exhaust gas (EG) extraction port (76) disposed along the EGR path at the exhaust gas compressor, the turbine, the turbine combustor, or the recirculation conduit;
a second EG extraction port disposed along the EGR path at the exhaust gas compressor, the turbine, the turbine combustor, or the recirculation conduit, wherein at least one of the first or second EG extraction ports is disposed at the turbine combustor; and
a control system (100) configured to:
control the power plant such that the turbine combustor operates, in periods, at a preferred equivalence ratio between 0.95 and 1.05;
receive sensor feedback indicative of a property of the combustion exhaust gas flowing through the first EG extraction port and the second EG extraction port;
control extraction of the combustion exhaust gas through the first EG extraction port and the second EG extraction port during the periods when the combustor operates at the preferred equivalence ratio, based at least in part on the sensor feedback indicative of the property of the combustion exhaust gas; and
controllably mixing the combustion exhaust gas extracted from the first EG extraction port and from the second EG extraction port to generate a combined combustion exhaust gas having a preferred value for the property of the combined combustion exhaust gas based on an intended downstream process.

2. The system of claim 1, wherein the downstream process comprises at least one of a hydrocarbon production system (12), a pipeline (86), a storage tank (88), or a carbon sequestration system (90).

3. The system of claim 1, comprising an exhaust gas (EG) processing system (54) disposed along the EGR path between the turbine and the exhaust gas compressor and configured to treat the combustion exhaust gas.

4. The system of claim 3, wherein at least one of the first or second EG extraction ports is coupled to the EG processing system.

5. The system of claim 3, wherein the EG processing system comprises at least one of a catalyst unit (251), a booster blower (257), a heat exchanger (253), a heat recovery steam (56) generator, a particulate removal unit (261), a moisture removal unit (259), or a vent (263).

6. The system of claim 5, wherein the first or second EG extraction ports is coupled to the EG processing system at, upstream of, or downstream of at least one of the catalyst unit, the booster blower, the heat exchanger, the heat recovery steam generator, the particulate removal unit, the moisture removal unit, or the vent.

7. The system of claim 1, wherein one of the first or second EG extraction ports is disposed along the turbine or the exhaust gas compressor.

8. The system of claim 1, comprising:
a stoichiometric exhaust gas recirculation (SEGR) gas turbine engine (150) having the turbine combustor, the turbine, and the exhaust gas compressor;
an exhaust gas extraction system coupled to the stoichiometric exhaust gas recirculation (SEGR) gas turbine engine; and
a hydrocarbon production system coupled to the exhaust gas extraction system.

9. A method of controlling a power plant system that comprises a combustion exhaust gas and an EGR path thereof, wherein the power plant system includes a turbine combustor operably connected to a turbine, and wherein the EGR path comprises an exhaust gas compressor, the combustor positioned downstream of the exhaust gas compressor, the turbine positioned downstream of the turbine combustor, and a recirculation conduit configured to direct an outflow of the combustion exhaust gas from the turbine to the exhaust gas compressor, the method comprising:
operating the combustor, during periods, at a preferred equivalence ratio between 0.95 and 1.05;
driving the turbine with combustion products from the turbine combustor;
outputting the combustion exhaust gas from the turbine and directing the combustion exhaust gas from the turbine to the exhaust gas compressor via the recirculation conduit;
compressing the combustion exhaust gas from the turbine in the exhaust gas compressor;
routing the combustion exhaust gas along the EGR path from the exhaust gas compressor, through the turbine combustor, and into the turbine;
extracting the combustion exhaust gas, during the periods when the combustor is operated at the preferred equivalence ratio, via a first extraction port disposed along the EGR path at the combustor;
extracting the combustion exhaust gas, during the periods when the combustor is operated at the preferred equivalence ratio, via a second extraction port disposed along the EGR path;
receiving sensor feedback indicative of a property of the combustion exhaust gas flowing through the first extraction port and the second extraction port;
controlling extraction of the combustion exhaust gas through the first and second extraction ports located along the EGR path, based at least in part on the sensor feedback; and
controllably mixing the combustion exhaust gas extracted at the first extraction port with the combustion exhaust gas extracted at the second extraction port so as to enable a combined combustion exhaust gas having a preferred value of the property for an intended downstream process.

10. The method of claim 9, comprising treating the extracted combustion exhaust gas via an exhaust gas (EG) supply system configured to output the treated combustion exhaust gas to the intended downstream processes.

## Patentansprüche

1. System (52), umfassend:
eine Turbinenbrennkammer (160);
eine Turbine, die durch Verbrennungsprodukte von der Turbinenbrennkammer angetrieben wird;
einen Abgaskompressor (158), wobei der Abgaskompressor konfiguriert ist, um ein Verbrennungsabgas zu komprimieren und von der Turbine zur Turbinenbrennkammer zu leiten;
einen Abgasrückführungs-(AGR-)Pfad (110), der sich durch den Abgaskompressor, die Turbinenbrennkammer und die Turbine erstreckt;
eine Rückführleitung, die konfiguriert ist, um einen Austrag des Verbrennungsabgases aus der Turbine als einen Eintrag des Verbrennungsabgases in den Abgaskompressor zu leiten;
ein erster Abgas-(AG-)Extraktionsport (76), der entlang des AGR-Pfads am Abgaskompressor, der Turbine, der Turbinenbrennkammer oder der Rückführleitung angeordnet ist;
ein zweiter AG-Extraktionsport, der entlang des AGR-Pfads am Abgaskompressor, der Turbine, der Turbinenbrennkammer oder der Rückführleitung angeordnet ist, wobei mindestens einer der ersten oder zweiten AG-Extraktionsports an der Turbinenbrennkammer angeordnet ist; und
ein Steuersystem (100), das konfiguriert ist, um:
das Kraftwerk so zu steuern, dass die Turbinenbrennkammer in Zeiträumen mit einem bevorzugten Äquivalenz-verhältnis zwischen 0,95 und 1,05 arbeitet;
Empfangen einer Sensorrückmeldung, die eine Eigenschaft des Verbrennungsabgases anzeigt, das durch den ersten AG-Extraktionsport und den zweiten AG-Extraktionsport strömt;
Steuern der Extraktion des Verbrennungsabgases durch den ersten AG-Extraktionsport und den zweiten AG-Extraktionsport während der Zeiträume, in denen die Brennkammer mit dem bevorzugten Äquivalenzverhältnis arbeitet, zumindest teilweise basierend auf der Sensorrückmeldung, die die Eigenschaft des Verbrennungsabgases anzeigt; und
steuerbares Mischen des Verbrennungsabgases, das von dem ersten AG-Extraktionsport und dem zweiten AG-Extraktionsport entnommen wird, um ein kombiniertes Verbrennungsabgas mit einem bevorzugten Wert für die Eigenschaft des kombinierten Verbrennungsabgases auf der Grundlage eines beabsichtigten nachgeschalteten Prozesses zu erzeugen.

2. System nach Anspruch 1, wobei der nachgeschaltete Prozess mindestens einer von einem Kohlenwasserstoffproduktionssystem (12), einer Pipeline (86), einem Speichertank (88) oder einem Kohlenstoffsequestrierungssystem (90) umfasst.

3. System nach Anspruch 1, umfassend ein Abgas-(AG-)Verarbeitungssystem (54), das entlang des AGR-Pfads zwischen der Turbine und dem Abgaskompressor angeordnet und konfiguriert ist, um das Verbrennungsabgas zu behandeln.

4. System nach Anspruch 3, wobei mindestens einer der ersten oder zweiten AG-Extraktionsports mit dem AG-Verarbeitungssystem gekoppelt ist.

5. System nach Anspruch 3, wobei das AG-Verarbeitungssystem mindestens eine Katalysatoreinheit (251), ein Druckerhöhungsgebläse (257), einen Wärmetauscher (253), einen Wärmerückgewinnungsdampferzeuger (56), eine Partikelent-fernungseinheit (261), eine Feuchtigkeitsentfernungseinheit (259) oder eine Entlüftung (263) umfasst.

6. System nach Anspruch 5, wobei der erste oder zweite AG-Extraktionsport an das AG-Verarbeitungssystem, stromaufwärts von oder stromabwärts von der Katalysatoreinheit, an das Zusatzgebläse, den Wärmetauscher, den Wärmerückgewinnungsdampferzeuger, die Partikelentfernungseinheit, die Feuchtigkeitsentfernungseinheit oder die Entlüftung gekoppelt ist.

7. System nach Anspruch 1, wobei einer der ersten oder zweiten AG-Entnahmeports entlang der Turbine oder des Abgaskompressors angeordnet ist.

8. System nach Anspruch 1, umfassend:
ein Gasturbinentriebwerk (150) mit stöchiometrischer Abgasrückführung (SAGR), das die Turbinenbrennkammer, die Turbine und den Abgaskompressor aufweist;
ein Abgasextraktionssystem, das mit dem Gasturbinentriebwerk mit stöchiometrischer Abgasrückführung (SAGR) gekoppelt ist; und
ein Kohlenwasserstoffproduktionssystem, das mit dem Abgasextraktionssystem gekoppelt ist.

9. Verfahren zum Steuern eines Kraftwerkssystems, das ein Verbrennungsabgas und einen AGR-Pfad davon umfasst, wobei das Kraftwerkssystem eine Turbinenbrennkammer, die betriebsbereit mit einer Turbine verbunden ist, und wobei der AGR-Pfad einen Abgaskompressor umfasst, wobei die Brennkammer stromabwärts des Abgaskompressors positioniert ist, die Turbine stromabwärts der Turbinenbrennkammer positioniert ist, und eine Rückführleitung umfasst, die konfiguriert ist, um einen Austrag des Verbrennungsabgases von der Turbine zu dem Abgaskompressor zu leiten, wobei das Verfahren umfasst:
Betreiben der Brennkammer während Zeiträumen bei einem bevorzugten Äquivalenzverhältnis zwischen 0,95 und 1,05;
Antreiben der Turbine mit Verbrennungsprodukten von der Turbinenbrennkammer;
Austragen des Verbrennungsabgases von der Turbine und Leiten des Verbrennungsabgases von der Turbine zu dem Abgaskompressor über die Rückführleitung;
Komprimieren des Verbrennungsabgases von der Turbine in dem Abgaskompressor;
Leiten des Verbrennungsabgases entlang des AGR-Pfads vom Abgaskompressor durch die Turbinenbrennkammer und in die Turbine;
Extrahieren des Verbrennungsabgases während der Perioden, in denen die Brennkammer mit dem bevorzugten Äquivalenzverhältnis betrieben wird, über einen ersten Extraktionsport, der entlang des AGR-Pfads an der Brennkammer angeordnet ist;
Extrahieren des Verbrennungsabgases während der Perioden, in denen die Brennkammer mit dem bevorzugten Äquivalenzverhältnis betrieben wird, über einen zweiten Extraktionsport, der entlang des AGR-Pfades angeordnet ist;
Empfangen einer Sensorrückmeldung, die eine Eigenschaft des Verbrennungsabgases anzeigt, das durch den ersten Extraktionsport und den zweiten Extraktionsport strömt;
Steuern der Extraktion des Verbrennungsabgases durch den ersten und den zweiten Extraktionsport, die entlang des AGR-Pfads angeordnet sind, zumindest teilweise auf der Grundlage der Sensorrückkopplung; und
steuerbares Mischen des an dem ersten Extraktionsport extrahierten Verbrennungsabgases mit dem an dem zweiten Extraktionsport extrahierten Verbrennungsabgas, um ein kombiniertes Verbrennungsabgas mit einem bevorzugten Wert der Eigenschaft für einen beabsichtigten nachgeschalteten Prozess zu ermöglichen.

10. Verfahren nach Anspruch 9, umfassend das Behandeln des extrahierten Verbrennungsabgases über ein Abgas-(AG-)Versorgungssystem, das konfiguriert ist, um das behandelte Verbrennungsabgas an die beabsichtigten nachgeordneten Prozesse abzugeben.

## Revendications

1. Système (52), comprenant :
une chambre de combustion de turbine (160) ;
une turbine entraînée par les produits de combustion provenant de la chambre de combustion de turbine ;
un compresseur de gaz d'échappement (158), dans lequel le compresseur de gaz d'échappement est configuré pour comprimer et acheminer un gaz d'échappement de combustion de la turbine jusqu'à la chambre de combustion de turbine ;
un trajet de recirculation de gaz d'échappement (EGR) (110) s'étendant à travers le compresseur de gaz d'échappement, la chambre de combustion de turbine, et la turbine ;
une conduite de recirculation configurée pour diriger un flux de sortie du gaz d'échappement de combustion de la turbine en tant que flux d'entrée du gaz d'échappement de combustion jusqu'au compresseur de gaz d'échappement ;
un premier orifice d'extraction de gaz d'échappement (EG) (76) disposé le long du trajet d'EGR au niveau du compresseur de gaz d'échappement, de la turbine, de la chambre de combustion de turbine, ou de la conduite de recirculation ;
un deuxième orifice d'extraction d'EG disposé le long du trajet d'EGR au niveau du compresseur de gaz d'échappement, de la turbine, de la chambre de combustion de turbine, ou de la conduite de recirculation, dans lequel au moins l'un des premier et deuxième orifices d'extraction d'EG est disposé au niveau de la chambre de combustion de turbine ; et
un système de commande (100) configuré pour :
commander la centrale électrique de sorte que la chambre de combustion de turbine fonctionne, dans des périodes, avec un rapport d'équivalence préféré entre 0,95 et 1,05 ;
recevoir une rétroaction de capteur indicative d'une propriété du gaz d'échappement de combustion s'écoulant à travers le premier orifice d'extraction d'EG et le deuxième orifice d'extraction d'EG ;
commander l'extraction du gaz d'échappement de combustion à travers le premier orifice d'extraction d'EG et le deuxième orifice d'extraction d'EG pendant les périodes où la chambre de combustion fonctionne avec le rapport d'équivalence préféré, sur la base au moins en partie de la rétroaction de capteur indicative de la propriété du gaz d'échappement de combustion ; et
mélanger de manière contrôlable le gaz d'échappement de combustion extrait du premier orifice d'extraction d'EG et du deuxième orifice d'extraction d'EG pour générer un gaz d'échappement de combustion combiné ayant une valeur préférée pour la propriété du gaz d'échappement de combustion combiné sur la base d'un processus aval voulu.

2. Système selon la revendication 1, dans lequel le processus aval comprend au moins l'un d'un système de production d'hydrocarbure (12), d'un pipeline (86), d'un réservoir de stockage (88), et d'un système de séquestration de carbone (90).

3. Système selon la revendication 1, comprenant un système de traitement de gaz d'échappement (EG) (54) disposé le long du trajet d'EGR entre la turbine et le compresseur de gaz d'échappement et configuré pour traiter le gaz d'échappement de combustion.

4. Système selon la revendication 3, dans lequel au moins l'un des premier et deuxième orifices d'extraction est accouplé au système de traitement d'EG.

5. Système selon la revendication 3, dans lequel le système de traitement d'EG comprend au moins l'un d'une unité de catalyseur (251), d'un ventilateur suramplificateur (257), d'un échangeur de chaleur (253), d'une génératrice de vapeur à récupération de chaleur (56), d'une unité de retrait de matière particulaire (261), d'une unité de retrait d'humidité (259), et d'un évent (263).

6. Système selon la revendication 5, dans lequel le premier ou le deuxième orifice d'extraction est accouplé au système de traitement d'EG au niveau, en amont, ou en aval d'au moins l'un de l'unité de catalyseur, du ventilateur suramplificateur, de l'échangeur de chaleur, de la génératrice de vapeur à récupération de chaleur, de l'unité de retrait de matière particulaire, de l'unité de retrait d'humidité, et de l'évent.

7. Système selon la revendication 1, dans lequel l'un du premier et du deuxième orifice d'extraction est disposé le long de la turbine ou du compresseur de gaz d'échappement.

8. Système selon la revendication 1, comprenant :
un moteur à turbine à gaz à recirculation de gaz d'échappement stœchiométrique (SEGR) (150) comportant la chambre de combustion de turbine, la turbine, et le compresseur de gaz d'échappement ;
un système d'extraction de gaz d'échappement accouplé au moteur à turbine à gaz à recirculation de gaz d'échappement stœchiométrique (SEGR) ; et
un système de production d'hydrocarbure accouplé au système d'extraction de gaz d'échappement.

9. Procédé de commande d'un système de centrale électrique qui comprend un gaz d'échappement de combustion et un trajet d'EGR de celui-ci, dans lequel le système de centrale électrique comprend une chambre de combustion de turbine reliée de manière fonctionnelle à une turbine, et dans lequel le trajet d'EGR comprend un compresseur de gaz d'échappement, la chambre de combustion positionnée en aval du compresseur de gaz d'échappement, la turbine positionnée en aval de la chambre de combustion de turbine, et une conduite de recirculation configurée pour diriger un flux de sortie du gaz d'échappement de combustion de la turbine jusqu'au compresseur de gaz d'échappement, le procédé comprenant :
la mise en oeuvre de la chambre de combustion, pendant des périodes, avec un rapport d'équivalence préféré entre 0,95 et 1,05 ;
l'entraînement de la turbine avec les produits de combustion provenant de la chambre de combustion de turbine ;
la sortie du gaz d'échappement de combustion provenant de la turbine et le guidage du gaz d'échappement de combustion de la turbine jusqu'au compresseur de gaz d'échappement par l'intermédiaire de la conduite de recirculation ;
la compression du gaz d'échappement de combustion provenant de la turbine dans le compresseur de gaz d'échappement ;
l'acheminement du gaz d'échappement de combustion le long du trajet d'EGR du compresseur de gaz d'échappement, à travers la chambre de combustion de turbine, et dans la turbine ;
l'extraction du gaz d'échappement de combustion, pendant les périodes où la chambre de combustion est mise en œuvre avec le rapport d'équivalence préféré, à travers un premier orifice d'extraction disposé le long du trajet d'EGR au niveau de la chambre de combustion ;
l'extraction du gaz d'échappement de combustion, pendant les périodes où la chambre de combustion est mise en œuvre avec le rapport d'équivalence préféré, à travers un deuxième orifice d'extraction disposé le long du trajet d'EGR ;
la réception d'une rétroaction de capteur indicative d'une propriété du gaz d'échappement de combustion s'écoulant à travers le premier orifice d'extraction et le deuxième orifice d'extraction ;
la commande de l'extraction du gaz d'échappement de combustion à travers les premier et deuxième orifices d'extraction situés le long du trajet d'EGR, sur la base au moins en partie de la rétroaction de capteur ; et
le mélange de manière contrôlable du gaz d'échappement de combustion extrait au niveau du premier orifice d'extraction avec le gaz d'échappement de combustion extrait au niveau du deuxième orifice d'extraction de manière à permettre qu'un gaz d'échappement de combustion combiné ait une valeur préférée de la propriété pour un processus aval voulu.

10. Procédé selon la revendication 9, comprenant le traitement du gaz d'échappement de combustion extrait par l'intermédiaire d'un système d'alimentation en gaz d'échappement (EG) configuré pour sortir le gaz d'échappement de combustion traité vers les processus aval voulus.
